(19) Europäisches Patentamt
European Patent Office
Office européen des brevets

(11) EP 4 317 071 A1

(12) EUROPEAN PATENT APPLICATION
published in accordance with Art. 153(4) EPC

(43) Date of publication:
07.02.2024 Bulletin 2024/06

(21) Application number: 22780247.7

(22) Date of filing: 18.03.2022

(51) International Patent Classification (IPC):
C01G 29/00 (2006.01)          C08L 101/00 (2006.01)
C09D 201/00 (2006.01)         C01G 49/00 (2006.01)
C08K 3/30 (2006.01)           C09D 7/61 (2018.01)

(52) Cooperative Patent Classification (CPC):
C01G 29/00; C01G 49/00; C08K 3/30;
C08L 101/00; C09D 7/61; C09D 201/00

(86) International application number:
PCT/JP2022/012674

(87) International publication number:
WO 2022/210032 (06.10.2022 Gazette 2022/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 01.04.2021  JP 2021062754
06.04.2021  JP 2021064581

(71) Applicant: Ishihara Sangyo Kaisha, Ltd.
Osaka-shi, Osaka 550-0002 (JP)

(72) Inventors:
• SANEFUJI, Norihiko
  Osaka-shi, Osaka 550-0002 (JP)
• OKI, Takahiro
  Osaka-shi, Osaka 550-0002 (JP)
• AZUMA, Ryusei
  Osaka-shi, Osaka 550-0002 (JP)

(74) Representative: Grünecker Patent- und
Rechtsanwälte
PartG mbB
Leopoldstraße 4
80802 München (DE)

(54) BISMUTH SULFIDE PARTICLES, METHOD FOR PRODUCING SAME, AND APPLICATION OF SAME

(57) The present invention addresses the problem of realizing bismuth sulfide which readily reflects infrared light and which has a degree of blackness that is equal to or greater than that of carbon black. The present invention pertains to bismuth sulfide particles which include aggregated secondary particles in which primary particles are aggregated, and in which the cumulative 50% diameter (D1) in a cumulative volume distribution, as measured by a laser diffraction/scattering particle size distribution measuring device is 0.2 μm to 10 μm, inclusive. Included is a step in which a bismuth compound and a sulfur compound are heated at 30°C to 100°C, inclusive, in a dispersion medium in the presence of a protective agent.

FIG. 1

Description

**TECHNICAL FIELD**

The present invention relates to a bismuth sulfide particle, a method for producing the bismuth sulfide particle, and also relates to a black pigment, an infrared reflective material, a laser reflective material for laser imaging detection and ranging (i.e., LiDAR), a solvent composition, a resin composition, a paint composition, a paint film, and the like, each of which contains the bismuth sulfide particle.

**BACKGROUND ART**

As the general-purpose black pigment, carbon black is known. Carbon black has a high blackness and is widely used as a coloring agent for a paint, a plastic, or the like.

However, since carbon black absorbs infrared rays, an article of which a surface has been painted with a black paint containing carbon black and a plastic product containing carbon black absorb infrared rays and the surface temperature tends to rise in an outdoor environment irradiated with sunlight, and as a result, deterioration of such products comes to easily progress.

Also, since carbon black absorbs infrared rays, it is difficult to apply carbon black to LiDAR, which has attracted attention in the field of autonomous driving technology in recent years. LiDAR is known as a technique for detecting a distance between a surrounding object and a subject, a position and a shape of an object, and the like. In LiDAR, a distance and a direction to an object are measured by irradiating an object with laser light (i.e., near-infrared light) and measuring the time from when the laser light (i.e., near-infrared light) hits the object until when the laser light bounces back. Therefore, in order to ensure the measurement accuracy of LiDAR, it is necessary for an object to reflect the laser light (i.e., near-infrared light). However, in a case where a body of an automobile is painted with a black paint containing carbon black, laser light (i.e., near-infrared light) of LiDAR is absorbed on a surface of the body and the reflection intensity of the laser light (i.e., near-infrared light) cannot be sufficiently ensured, and thus the measurement accuracy of LiDAR cannot be sufficiently ensured.

For these circumstances, in a case of considering the reduction of a rise in the surface temperature of a black object and the application of LiDAR to a black article, "a material that reflects infrared rays while being black" (that is, a black infrared reflective material) has been required.

There are several candidates for the black infrared reflective material, and one of the candidates is bismuth sulfide. In general, bismuth sulfide is known as a material that takes on a black color and that is relatively difficult to absorb infrared rays (in other words, a material that easily transmits or reflects infrared rays). For example, "Patent Literature 1" discloses the use of bismuth sulfide particles as a black pigment for a light absorbing material in a liquid crystal display or in a light-shielding film. The bismuth sulfide particles are obtained by the following: adding an aqueous solution in which sodium thiosulfate is dissolved to an aqueous solution in which a bismuth nitrate pentahydrate and a sodium hydroxide are dissolved, and heating the obtained mixture while stirring.

Further, "Non Patent Literature 1" discloses that bismuth sulfide particles in black color can be synthesized by the following: adding hydrochloric acid to an aqueous solution in which bismuth oxide and thiocarbohydrazide are dissolved, subsequently adding polyvinyl alcohol (PVA) to the mixture, and then performing the hydrothermal synthesis at a temperature of 200°C. Moreover, "Non Patent Literature 2" discloses that bismuth sulfide particles in black color can be synthesized by refluxing an aqueous solution in which a bismuth nitrate pentahydrate, thiourea, and a polyethylene glycol (PEG) are dissolved, at a temperature of 130°C.

**CITATION LIST**

**PATENT LITERATURE**

PATENT LITERATURE 1: JPH05-264984 A

**NON PATENT LITERATURE**

NON PATENT LITERATURE 1: Journal of Physics and Chemistry of Solids, vol.71 (2010), pp. 712-715
NON PATENT LITERATURE 2: Materials Letters, vol.91 (2013), pp. 100-102

## SUMMARY OF INVENTION

### TECHNICAL PROBLEM

None of the bismuth sulfide particles produced by the conventional techniques described above have a desired blackness, and further improvement of the blackness has been desired. For this reason, it has been desired that bismuth sulfide has high infrared reflectivity and a blackness equal to or greater than almost the same as that of carbon black has been desired.

### SOLUTION TO PROBLEM

As a result of intensive studies to obtain a bismuth sulfide particle having a high blackness, the present inventors have found that when a protective agent is allowed to coexist in reacting a bismuth compound with a sulfur compound at a temperature of 100°C or less to synthesize bismuth sulfide, the agglomeration degree of primary particles of the bismuth sulfide particle can be reduced, and as a result, a bismuth sulfide particle having a higher blackness than those of the conventional bismuth sulfide particles can be obtained, and thus have completed the present invention.
That is, the present invention is as follows.

[1] A bismuth sulfide particle comprising an agglomerated secondary particle in which primary particles are agglomerated, wherein a cumulative 50% particle size (D1) in volume-based cumulative particle-size distribution measured by means of a laser diffraction/scattering particle-size distribution analyzer is a range from 0.2 $\mu$m or more to 10 $\mu$m or less.
[2] The bismuth sulfide particle according to [1], wherein a ratio of the cumulative 50% particle size (D1) in volume-based cumulative particle-size distribution to a cumulative 50% particle diameter (D2) in number-based cumulative particle-size distribution of the primary particles measured by means of a scanning electron microscope, namely the ratio represented as "D1/D2" is a range from more than 1 and 6 or less.
[3] The bismuth sulfide particle according to [1] or [2], wherein the cumulative 50% particle diameter (D2) is a range from 0.2 $\mu$m or more to 3 $\mu$m or less.
[4] The bismuth sulfide particle according to any one of [1] to [3], wherein a ratio (D3) of a difference between a cumulative 90% particle size (D90) and a cumulative 10% particle size (D10) to a cumulative 50% particle size (D50) in number-based cumulative particle-size distribution measured by means of a Coulter counter-type particle-size distribution analyzer, namely the ratio calculated by "D3 = (D90 - D10)/D50" is 3.0 or less.
[5] The bismuth sulfide particle according to any one of [1] to [4] comprising at least one element selected from the group consisting of Al, Ce, La, Fe, and Y and represented as "X", wherein a ratio of the mole number of an atom of the element "X" to the mole number of an atom of bismuth, namely the ratio represented as a "X/Bi" molar ratio is a range from more than 0 to 0.15 or less.
[6] The bismuth sulfide particle according to [5], wherein the element "X" is Al.
[7] The bismuth sulfide particle according to any one of [1] to [6], wherein a shape of a bismuth sulfide particle observed with a scanning electron microscope is a shape of assembling one ends of 10 or more needle-like components and/or a shape of having two or more of protrusions of plate-like pieces and/or needle-like pieces on a surface of a substantially spherical body.
[8] A black pigment comprising the bismuth sulfide particle according to any one of [1] to [7].
[9] A matting pigment comprising the bismuth sulfide particle according to any one of [1] to [7].
[10] An infrared reflective material comprising the bismuth sulfide particle according to any one of [1] to [7].
[11] A laser reflective material for LiDAR comprising the bismuth sulfide particle according to any one of [1] to [7].
[12] A solvent composition comprising the bismuth sulfide particle according to any one of [1] to [7] and a solvent.
[13] A resin composition comprising the bismuth sulfide particle according to any one of [1] to [7] and a resin.
[14] A paint composition comprising the bismuth sulfide particle according to any one of [1] to [7] and a resin for a paint.
[15] A paint film comprising the paint composition according to [14].
[16] The paint film according to [15] comprising the bismuth sulfide particle according to any one of [1] to [7] at a pigment volume concentration of 15% or more.
[17] A method for producing a bismuth sulfide particle comprising the step of heating a bismuth compound and a sulfur compound at a range from 30°C or more to 100°C or less in the presence of a protective agent in a dispersion medium.
[18] The method for producing a bismuth sulfide particle according to [17] comprising the step of maintaining a bismuth compound and a sulfur compound at a range from 10°C or more to 40°C or less for a range from 1 hour or more to 24 hours or less before the step of heating the bismuth compound and the sulfur compound in the presence of a protective agent in a dispersion medium.

[19] The method for producing a bismuth sulfide particle according to [17] or [18] comprising the step of mixing a compound of at least one element selected from the group consisting of Al, Ce, La, Fe, and Y and represented as "X", namely the compound of the element "X" and a bismuth compound.

[20] The method for producing a bismuth sulfide particle according to [19], wherein the element "X" is Al.

[21] The method for producing a bismuth sulfide particle according to [19] or [20], wherein the compound of the element "X" is mixed so that a ratio of the mole number of an atom of the element "X" to the mole number of an atom of bismuth, namely the ratio represented as a "X/Bi" molar ratio is a range from more than 0 to 10 or less.

[22] The method for producing a bismuth sulfide particle according to any one of [17] to [21], wherein the protective agent is a water-soluble polymer.

[23] The method for producing a bismuth sulfide particle according to [22], wherein the water-soluble polymer is a polyvinyl alcohol and/or a polyethylene glycol.

[24] The method for producing a bismuth sulfide particle according to any one of [17] to [23] comprising the step of mixing a bismuth compound and a sulfur compound so that a ratio of the mole number of an atom of sulfur to the mole number of an atom of bismuth, namely the ratio represented as a "SBi" molar ratio is a range from 3.5 or more to 20 or less.

## ADVANTAGEOUS EFFECTS OF INVENTION

Since the bismuth sulfide particle according to the present invention has a higher blackness than those of the conventional bismuth sulfide particles, for example, a black pigment, a paint, and a paint film, each of which has a higher blackness than those of the conventional ones, can be realized. Further, since the bismuth sulfide particle according to the present invention has infrared reflectivity, the bismuth sulfide particle can be used as an infrared reflective material or a laser reflective material for LiDAR, for example, a black pigment for heat shielding or a laser reflective material for black LiDAR.

Also, the bismuth sulfide particle according to the present invention has high matting effect, and is useful as a matting pigment.

Also, with the use of the bismuth sulfide particle according to the present invention together with, for example, a solvent or a resin (for example, a resin for a paint), a solvent composition or a resin composition (for example, a resin composition for a paint) can be realized.

Also, the production method according to the present invention is a method of heating a bismuth compound and a sulfur compound at a predetermined temperature in the presence of a protective agent in a dispersion medium, and a bismuth sulfide particle having a high blackness can be produced by a simple method. In addition, the production method is a method of heating, at a predetermined temperature in the presence of a protective agent, a bismuth compound, a sulfur compound, and a compound of at least one element in which the at least one element is selected from the group consisting of Al, Ce, La, Fe, and Y and is conveniently represented as "X", and a bismuth sulfide particle having a higher blackness can be produced by containing the element "X" in the bismuth sulfide particle.

## BRIEF DESCRIPTION OF DRAWINGS

FIG. 1 is a scanning electron micrograph of the bismuth sulfide particle in "Example 1".

FIG. 2 is a volume-based cumulative particle-size distribution chart obtained by measuring the bismuth sulfide particle in "Example 1" by means of a laser diffraction/scattering particle-size distribution analyzer.

FIG. 3 is a number-based cumulative particle-size distribution chart obtained by measuring the primary particle diameter of the bismuth sulfide particle in "Example 1" by means of a scanning electron microscope.

FIG. 4 is a number-based cumulative particle-size distribution chart obtained by measuring the bismuth sulfide particle in "Example 1" by means of a Coulter counter-type particle-size distribution analyzer.

FIG. 5 is a number-based cumulative particle-size distribution chart obtained by measuring the bismuth sulfide particle in "Example 6" by means of a Coulter counter-type particle-size distribution analyzer.

FIG. 6 is reflectance spectra of a paint film using the bismuth sulfide particle in "Example 1" and a paint film using carbon black (i.e., "Reference Example").

FIG. 7 is a powder X-ray diffraction spectrum of the bismuth sulfide particle in "Example 1".

## DESCRIPTION OF EMBODIMENTS

The bismuth sulfide particle according to the present invention is a compound identified as bismuth sulfide (e.g., $Bi_2S_3$) from a powder X-ray diffraction spectrum, the blackness indicated by a L* value is sufficiently high in a powder of the bismuth sulfide particle, and the reflectance at a wavelength of a range from 780 to 2500 nm measured by means of a UV-Visible/NIR spectrophotometer has a sufficiently high characteristic.

The bismuth sulfide particle according to the present invention includes an agglomerated secondary particle in which primary particles of the bismuth sulfide particle are agglomerated. The agglomerated secondary particle is one in which the multiple (i.e., two or more) primary particles are agglomerated by intermolecular forces or the like. Such a bismuth sulfide particle according to the present invention may not all be in the form of agglomerated secondary particle, or may be partly in the form of primary particles.

A cumulative 50% particle size in volume-based cumulative particle-size distribution (the size is represented as "D1") of the bismuth sulfide particle according to the present invention measured by means of a laser diffraction/scattering particle-size distribution analyzer is a range from 0.2 $\mu$m or more to 10 $\mu$m or less. The cumulative 50% particle size (D1) of the bismuth sulfide particle according to the present invention is preferably a range from 0.6 $\mu$m or more to 8.0 $\mu$m or less, more preferably a range from 1.0 $\mu$m or more to 6.0 $\mu$m or less, and furthermore preferably a range from 1.0 $\mu$m or more to 5.0 $\mu$m or less. If the particle sizes of the primary particles are the same, the larger the agglomerated secondary particle size is, the higher the agglomeration degree is. With this respect, the bismuth sulfide particle according to the present invention has a cumulative 50% particle size (D1) of 10 $\mu$m or less, and thus it can be said that the agglomeration degree is relatively small. The smaller the agglomeration degree of the bismuth sulfide particle is, the higher the blackness of the bismuth sulfide particle (eventually, a black pigment, a paint, or a paint film, which contains the bismuth sulfide particle) is, and thus the cumulative 50% particle size (D1) is an important index.

The cumulative 50% particle size (D1) of the bismuth sulfide particle according to the present invention means a cumulative 50% particle size in volume-based cumulative particle-size distribution when the particle-size distribution is measured by means of a laser diffraction/scattering particle-size distribution analyzer, "LA-950" (manufactured by HORIBA, Ltd.) using, as a sample, a dispersion liquid in which bismuth sulfide particles are dispersed in a dispersion medium such as water. The detailed measurement conditions are as follows. In this regard, the above dispersion liquid was prepared by means of an ultrasonic washing machine, "UT-305" (manufactured by SHARP Corporation) as a disperser.

[Measurement conditions]

Sample refractive index: 2.13
Solvent refractive index: 1.33
Circulation speed: 10
Ultrasonic intensity: 1
Ultrasonic time: 2 minutes
Agitation intensity: 10
Transmittance (R) at laser light (650 nm): 95 to 70%
Transmittance (B) at LED light (405 nm): 90 to 80%

In the bismuth sulfide particle according to the present invention, the cumulative 50% particle diameter in number-based cumulative particle-size distribution (the diameter is represented as "D2") of primary particles thereof measured by means of a scanning electron microscope is preferably a range from 0.2 $\mu$m or more to 3 $\mu$m or less, and more preferably a range from 0.5 $\mu$m or more to 2 $\mu$m or less. The cumulative 50% particle diameter (D2) is the median diameter of the primary particles of bismuth sulfide observed with a scanning electron microscope. If the cumulative 50% particle diameter (D2) is in the above range, the above-described cumulative 50% particle size (D1) of the bismuth sulfide particle according to the present invention easily falls in desired values (specifically, 10 $\mu$m or less). Thus, it is preferable that the cumulative 50% particle diameter (D2) is in the above range. The cumulative 50% particle diameter (D2) means a cumulative 50% particle diameter in a case of the following: the bismuth sulfide particle according to the present invention is observed with a scanning electron microscope, "S-4800" (manufactured by Hitachi High-Technologies Corporation), diameters (longest diameters) of arbitrarily-extracted 100 primary particles are individually measured, and the measured diameters are represented as a number-based cumulative particle-size distribution of the primary particles.

In the bismuth sulfide particle according to the present invention, a ratio of the above "D1" to the cumulative 50% particle diameter (D2) of primary particles of, namely "D1/D2" is preferably a range from more than 1 to 6 or less, more preferably a range from more than 1 to 5 or less, and furthermore preferably a range from more than 1 to 4 or less.

The above "D1/D2" means an agglomeration degree of bismuth sulfide particles when the size of primary particles is also considered, and also means that the smaller the value is, the smaller the agglomeration degree is (in other words, this means to be closer to the primary particle and closer to the state of monodispersity). As described above, there is a correlation between the agglomeration degree of primary particles of the bismuth sulfide particle and the blackness of the bismuth sulfide particle (eventually, a black pigment, a paint, or a paint film, which contains the bismuth sulfide particle), and by reducing the value of "D1/D2" (specifically, 6 or less), the blackness can be further improved.

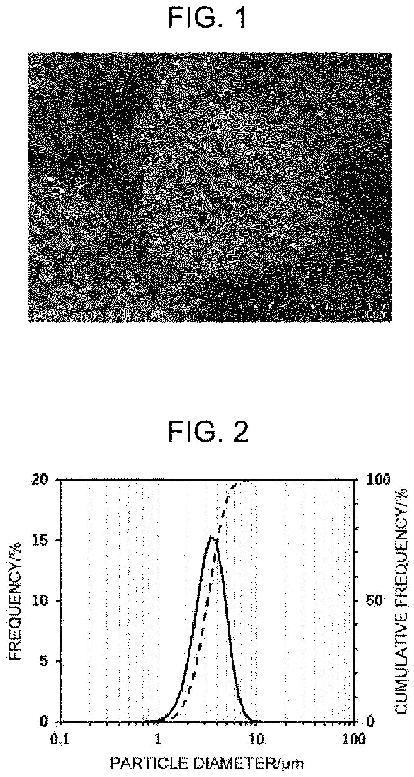

In the bismuth sulfide particle according to the present invention, the shape of the primary particle thereof observed with a scanning electron microscope is preferably a shape similar to that of a sea urchin (specifically, purple sea urchin). More specifically, a shape of assembling one ends of 10 or more needle-like components, or a shape of having two or more protrusions of plate-like pieces and/or needle-like pieces on a surface of a substantially spherical body is preferable. FIG. 1 shows an electron micrograph of the bismuth sulfide particle according to the present invention in which the primary particle has a shape similar to that of a sea urchin.

In the bismuth sulfide particle having a shape similar to that of a sea urchin, a large number of minute spaces are formed from the surface toward the inside of the particle because of the needle-like components. Since the light incident on a surface of a bismuth sulfide particle is repeatedly reflected many times in the minute spaces inside the particle, the reflectance of light (particularly, visible light) on the surface of the particle is reduced. Here, in the bismuth sulfide particle according to the present invention, the agglomeration degree of primary particles is highly reduced, and a larger part of the particle surfaces of the primary particles is exposed. For this reason, the effect of reducing the reflectance of visible light due to the shape similar to that of a sea urchin can be sufficiently exhibited, and as a result, a higher blackness can be realized.

In the bismuth sulfide particle according to the present invention, with respect to a cumulative 50% particle size (D50), a cumulative 90% particle size (D90), and a cumulative 10% particle size (D10), which are calculated from a number-based cumulative particle-size distribution measured by means of a Coulter counter-type particle-size distribution analyzer, a ratio of the difference between the cumulative 90% particle size (D90) and the cumulative 10% particle size (D10) to the cumulative 50% particle size (D50) (when the ratio is represented as "D3", D3 = (D90 - D10)/D50) is preferably 3.0 or less, more preferably 2.0 or less, and furthermore preferably 1.2 or less. As the above Coulter counter-type particle-size distribution measuring device, for example, "Multisizer 4" (manufactured by Beckman Coulter, Inc.) can be used.

The above "D3" is an index of the spread of particle-size distribution, and means that the smaller the value is, the narrower the particle-size distribution is, and the larger the value is, the wider the particle-size distribution is.

In the bismuth sulfide particle according to the present invention in which the above "D1/D2" is a range from more than 1 to 6 or less, when the above "D3" is small (this means that the particle-size distribution is narrow), the abundance ratio of coarse particles and fine particles is meant to be small. Since the above coarse particle is understood as being an agglomerated secondary particle having a large agglomeration degree, it is understood that as the above "D3" becomes smaller, the agglomeration degree of the above coarse particle also becomes smaller. For this reason, the blackness of the bismuth sulfide particle according to the present invention can be further improved.

Also, as described above, it is understood that the bismuth sulfide particle according to the present invention exhibits a black color because the reflectance of light is reduced by reflecting incident light many times in minute spaces formed by the needle-like components. Here, it is preferable to lower the abundance ratio of particles having a very small primary particle diameter or agglomerated secondary particles of the particles (these are collectively referred to as fine particles) from the viewpoint of avoiding a situation where the minute spaces are not sufficiently formed when the abundance ratio is high and the reflectance of light cannot be sufficiently reduced. In other words, by reducing the abundance ratio of fine particles, the blackness of the bismuth sulfide particle according to the present invention can be further improved.

The bismuth sulfide particle according to the present invention preferably includes at least one element "X" selected from the group consisting of Al, Ce, La, Fe, and Y, the element "X" is more preferably Al or Ce, and the element "X" is furthermore preferably Al.

The above element "X" is preferably included so that a ratio of the mole number of an atom of the element "X" to the mole number of an atom of bismuth (i.e., a "X/Bi" molar ratio) in the bismuth sulfide particle according to the present invention is a range from more than 0 to 0.15 or less, and more preferably included so that the ratio is a range from more than 0 to 0.05 or less. The above "X/Bi" can be calculated from, for example, the results of measuring the bismuth sulfide particle according to the present invention by fluorescent X-ray analysis. As the device for performing the above fluorescent X-ray analysis, for example, "ZSX (registered trademark) Primus IV" (manufactured by Rigaku Corporation) can be illustrated.

It is understood that when the bismuth sulfide particle contains the element "X", one part of the bismuth atoms is replaced with the element "X" or the element "X" enters between the lattices composed of bismuth atoms, so that an impurity level is formed in the bandgap, thereby further improving the blackness.

The bismuth sulfide particle according to the present invention may include a carbon content of a range from 0.1% by mass or more to 5% by mass or less. Such a carbon content is derived from mainly a protective agent used in producing the bismuth sulfide of the present invention. The above carbon content can be measured by means of an elemental analyzer, and for example, "Vario EL cube" (manufactured by Elementar) can be used.

The surface of the bismuth sulfide particle according to the present invention may be coated with various kinds of inorganic compounds or organic compounds. As the inorganic compound, for example, an oxide and/or a hydrous oxide of a metal such as silicon, aluminum, titanium, zirconium, tin, or antimony can be illustrated. Also, as the organic compound, an organic silicon compound, an organometallic compound, and an organic compound such as a polyol-based organic compound, an amine-based organic compound, or a carboxylic acid-based organic compound (specifically, a trimethylol methane, a trimethylol ethane, a trimethylol propane, a pentaerythritol, a dimethylethanolamine, a triethanolamine, a stearic acid, an oleic acid, or a salt thereof) can be illustrated. The surface of the bismuth sulfide particle may be coated with the above inorganic compound, and then further coated with the above organic compound. The coating amount of the inorganic compound or the organic compound can be appropriately adjusted.

A conventional surface treatment method similar to coating a general pigment such as a titanium dioxide pigment can be used as the method for coating a surface of the bismuth sulfide particle with an inorganic compound or an organic compound. Specifically, it is preferable to add an inorganic compound or an organic compound to a slurry of the bismuth sulfide particles to perform their coatings, and it is more preferable to neutralize an inorganic compound or an organic compound in a slurry of the bismuth sulfide particles to perform their coatings by the precipitation on surfaces of the bismuth sulfide particles. Also, an inorganic compound or an organic compound may be mixed with a powder of the bismuth sulfide particles to perform their coatings by a dry process.

The bismuth sulfide particle according to the present invention can be produced, for example, by heating a bismuth compound and a sulfur compound at a range from 30°C or more to 100°C or less in the presence of a protective agent in a dispersion medium. The above temperature range is preferable from the viewpoint of avoiding a situation where the reaction does not proceed when the heating temperature is less than 30°C and where a hydrothermal device is required when the heating temperature is more than 100°C. The heating temperature is more preferably a range from 30°C or more to 85°C or less, and furthermore preferably a range from 30°C or more to 70°C or less.

It is understood that the above protective agent is adsorbed on a surface of the bismuth sulfide particle that has been heated and reacted in a dispersion medium. It is understood that the agglomeration of bismuth sulfide particles is reduced by steric hindrance of the adsorbed protective agent.

As the bismuth compound, for example, a bismuth sulfate, a bismuth nitrate, a bismuth nitrate pentahydrate, a bismuth subnitrate, a bismuth hydroxide, a bismuth oxide, a bismuth chloride, a bismuth bromide, a bismuth iodide, a bismuth oxychloride, a bismuth subcarbonate, a basic bismuth carbonate, or the like can be used. The above bismuth compound is not limited to one in the form of a powder, and a solution or suspension in which a powder is dissolved or suspended in advance in various kinds of solvents (e.g., water, formic acid, methanol, ethanol, 1-propanol, 2-propanol, and the like) can also be used.

Also, the above bismuth compound may be produced by a known method. For example, if the bismuth compound is bismuth hydroxide, it can be produced as follows. The bismuth nitrate pentahydrate is mixed with the nitric acid, and then the mixture is heated. Sodium hydroxide is added thereto, and the mixture is aged to obtain a suspension containing bismuth hydroxide. The obtained suspension is subjected to solid-liquid separation, and the solid content (specifically, bismuth hydroxide) is washed.

As the sulfur compound, sulfur element itself may be used, and for example, a thiocyanate such as a potassium thiocyanate, or a sodium thiocyanate; a thiosulfate such as a sodium thiosulfate, a potassium thiosulfate, or an ammonium thiosulfate; and an organic sulfur compound such as a thiourea, or a thioacetamide can be used. The above sulfur compound may be an anhydride or a hydrate, and either of them may be used. Also, the above sulfur compound is not limited to one in the form of a powder, and a solution or suspension in which a powder is dissolved or suspended in advance in various kinds of solvents (e.g., water, formic acid, methanol, ethanol, 1-propanol, 2-propanol, and the like) can also be used. Also, a known acid or base may be added to dissolve a powder suspended in a solvent.

The protective agent acts as a dispersion stabilizer for the synthesized bismuth sulfide particle, and as the protective agent, a known one can be used in the present invention. Examples of the protective agent include a protein-based one such as a gelatin, a gum arabic, a casein, a sodium caseinate, or an ammonium caseinate; a natural polymer such as a starch, a dextrin, an agar, or a sodium alginate; a cellulosic one such as a hydroxyethyl cellulose, a carboxymethyl cellulose, a methyl cellulose, or an ethyl cellulose; a vinyl-based one such as a polyvinyl alcohol, or a polyvinyl pyrrolidone; an acrylic one such as a sodium polyacrylate, or an ammonium polyacrylate; and a synthetic polymer such as a polyethylene glycol, and one kind or two or more kinds thereof may be used. Among them, it is preferable to use a water-soluble polymer, and examples of the above water-soluble polymer include a gelatin, a hydroxyethyl cellulose, a carboxymethyl cellulose, a polyvinyl alcohol, a polyvinyl pyrrolidone, and a polyethylene glycol, and particularly, it is preferable to use a polyvinyl alcohol, a polyethylene glycol, and a polyvinyl pyrrolidone. As the protective agent, a solution in which a protective agent is dissolved in various kinds of solvents (e.g., water, formic acid, methanol, ethanol, 1-propanol, 2-propanol, and the like) can also be used.

The above dispersion medium is something containing water as the main component, that is, the dispersion medium has a water content of 50% by mass or more. The water content in the aqueous dispersion medium is preferably 80% by mass or more, more preferably 90% by mass or more, and furthermore preferably 95% by mass. Examples of the components other than water include various kinds of organic solvents (e.g., methanol, ethanol, 2-propanol, butanol, acetone, methyl ethyl ketone, tetrahydrofuran, and the like), which are soluble in water.

The above materials may be mixed in any order. That is, the bismuth compound, the sulfur compound, and the dispersion medium are mixed in advance, and then to the mixture may be added the protective agent; the sulfur compound, the protective agent, and the dispersion medium are mixed in advance, and then to the mixture may be added the bismuth compound; or the bismuth compound, the protective agent, and the dispersion medium are mixed in advance, and then to the mixture may be added the sulfur compound. Also, all of the materials may be added to the dispersion medium at one time and mixed, or the bismuth compound, the sulfur compound, and the protective agent may be mixed in the dispersion medium one by one. Among them, it is preferable to perform the following: mixing the protective agent and the dispersion medium in advance; and then adding the bismuth compound to the mixture; and subsequently adding the sulfur compound thereto. In this way, each of the materials can be more uniformly dissolved in the solvent. The temperature at which the materials are mixed can be appropriately adjusted. In usual, the mixture can be performed at a temperature of an aqueous dispersion medium that is not heated, for example, at a temperature of a range from 5 to 30°C. Alternatively, the mixture can be performed, for example, at a temperature of a range from 10 to 50°C after the aqueous dispersion medium is heated.

In the above mixing step of materials, the sulfur compound and the bismuth compound are mixed so that the "SBi" molar ratio is preferably a range from 3.5 or more to 20 or less, more preferably a range from 4 or more to 12.5 or less, and furthermore preferably a range from 4.5 or more to 10 or less. When adjusting to such a range, a bismuth sulfide particle with a higher blackness can be produced. The above "SBi" molar ratio is a ratio obtained by calculating by dividing the mole number of an atom of sulfur in the sulfur compound by the mole number of an atom of bismuth in the bismuth compound.

In the above mixing step of materials, the amount of the above protective agent to be mixed can be appropriately adjusted depending on the kind of the protective agent. For example, in a case where a polyvinyl alcohol is used as the protective agent, the amount of the protective agent to be mixed is preferably a range from 250% by mass or more to 3000% by mass or less, and more preferably a range from 400% by mass or more to 2000% by mass or less with regard to the bismuth compound of the material. In a case where a polyethylene glycol is used as the protective agent, the amount of the protective agent to be mixed is preferably a range from 1500% by mass or more to 5000% by mass or less, and more preferably a range from 2000% by mass or more to 4000% by mass or less with regard to the bismuth compound of the material.

Also, in the above mixing step of materials, an additive agent such as a dispersant, an emulsifier, a thickener, a defoamer, or an anti-settling agent can be added arbitrarily.

It is preferable to appropriately adjust the pH of the mixed solution obtained in the above mixing step depending on the materials to be used. For example, in a case where a bismuth hydroxide, a sodium thiosulfate, a polyvinyl alcohol, and water are used as the materials, it is preferable to adjust the pH of the mixed solution obtained after the mixing step to 5 or less. It is more preferable to adjust the pH of the above mixed solution to 4 or less, and furthermore preferable to adjust the pH of the above mixed solution to 3 or less. The pH adjusting agent is not particularly limited, and a known acid or base such as a sulfuric acid, a nitric acid, a hydrochloric acid, a sodium hydroxide, or a potassium hydroxide can be used. However, the sulfuric acid used herein is not included in the above sulfur compound.

In the mixing of the above materials, a known blender such as a stirrer, a mixer, a homogenizer, or an agitator can be used.

Although the heating time at the above temperature can be set arbitrarily, the heating time is preferably a range from 0.5 hours or more to 10 hours or less.

Also, prior to the above heating step, a step of maintaining the mixed solution obtained in the above mixing step may be included, and the maintaining temperature is set to the above heating temperature or less, and the above maintaining temperature is preferably a range from 10°C or more to 40°C or less, more preferably a range from 12°C or more to 30°C or less, and furthermore preferably a range from 15°C or more to 25°C or less. Further, the maintaining time is preferably a range from 1 hour or more to 24 hours or less, more preferably a range from 2 hours or more to 20 hours or less, and furthermore preferably a range from 3 hours or more to 18 hours or less. In this way, the blackness of the bismuth sulfide particle according to the present invention can be further improved.

The above maintaining step may be performed at any stage as long as it is before the above heating step. That is, the above maintaining step may be performed after mixing the above materials or may be performed after the above pH adjustment step, but it is preferable to perform the above maintaining step after the above pH adjusting step. Also, in a case of performing heating during the mixing step, the temperature may be maintained. In addition, during the above maintaining step, the mixed solution may be mixed by means of a known blender such as a stirrer, a mixer, a homogenizer, or an agitator.

The mechanism that the blackness of the bismuth sulfide particle according to the present invention is further improved due to the above maintaining step can be understood as follows. Because the maintaining step is followed by performing heating, a nucleation step of the bismuth sulfide particle, and a growth step of the nucleus obtained in the nucleation step can be separated. The particle-size distribution of the bismuth sulfide particle obtained in such manner is narrower than that of the bismuth sulfide particle obtained without passing through the above maintaining step (i.e., the above "D3" is small). As described above, in a case where the above "D3" is small, the blackness of the bismuth sulfide particle is further improved, and thus it can be understood that the blackness of the bismuth sulfide particle according to the present invention is further improved by the above maintaining step.

Also, it is preferable that the method for producing a bismuth sulfide particle according to the present invention further includes the step of mixing a compound of at least one element "X" selected from the group consisting of Al, Ce, La, Fe, and Y and a bismuth compound. That is, the method is a method of heating a bismuth compound, a sulfur compound, and a compound of at least one element "X" selected from the group consisting of Al, Ce, La, Fe, and Y at a predetermined temperature in the presence of a protective agent in a dispersion medium, and the element "X" can be contained in the bismuth sulfide particle. The element "X" is preferably Al or Ce, and more preferably Al.

As the compound using Al as the element "X", for example, an aluminum hydroxide, an aluminum oxide, an aluminum chloride, an aluminum nitrate, an aluminum sulfate, a sodium aluminate, or the like can be used. As the compound using Ce as the element "X", for example, a cerium(III) oxide ($Ce_2O_3$), a cerium(IV) oxide ($CeO_2$), a cerium(III) sulfate octahydrate ($Ce_2(SO_4)_3 \cdot 8H_2O$), a cerium(III) sulfate tetrahydrate ($Ce(SO_4)_2 \cdot 4H_2O$), a cerium(III) chloride heptahydrate ($CeCl_3 \cdot 7H_2O$), a cerium(III) nitrate hexahydrate ($Ce(NO_3)_3 \cdot 6H_2O$), or the like can be used. As the compound using La as the element "X", for example, a lanthanum nitrate hexahydrate ($La(NO_3)_3 \cdot 6H_2O$), a lanthanum oxide ($La_2O_3$), a lanthanum chloride ($La_2Cl_3$), or the like can be used. As the compound using Fe as the element "X", an iron nitrate nonahydrate ($Fe(NO_3)_3 \cdot 9H_2O$), a metal iron, an iron(II) oxide (FeO), an iron(III) oxide ($Fe_2O_3$), a triiron tetraoxide ($Fe_3O_4$), an iron(II) sulfate ($FeSO_4$) or a hydrate thereof, an iron(III) sulfate ($Fe_2(SO_4)_3$) or a hydrate thereof, an iron(II) chloride (FeCh) or a hydrate thereof, an iron(III) chloride ($FeCl_3$) or a hydrate thereof, or the like can be used. As the compound using Y as the element "X", for example, an yttrium nitrate hexahydrate ($Y(NO_3)_3 \cdot 6H_2O$), an yttrium oxide ($Y_2O_3$), an yttrium(III) fluoride ($YF_3$), an yttrium(III) chloride ($YCl_3$), an yttrium(III) bromide ($YBr_3$), or the like can be used. The compound of the above element "X" is not limited to one in the form of a powder, and a solution or suspension in which a powder is dissolved or suspended in various kinds of solvents (e.g., water, formic acid, methanol, ethanol, 1-propanol, 2-propanol, and the like) can also be used.

The compound of the above element "X" may be mixed at any time. That is, it is preferable to mix the compound of the element "X" in any of the following steps: mixing the bismuth compound, the sulfur compound, the dispersion medium, and the protective agent; the maintaining step; and the heating step. Also, in a case of producing bismuth hydroxide as the bismuth compound, they may be mixed at that time.

Also, in a case of mixing the compound of the element "X" when producing the bismuth hydroxide, the mixing order is not particularly limited. That is, the bismuth nitrate pentahydrate and the compound of the element "X" may be mixed, and then the mixture may be dissolved in the nitric acid; the nitric acid and the compound of the element "X" may be mixed, and then in the mixture, the bismuth nitrate pentahydrate may be dissolved; the bismuth nitrate pentahydrate, the nitric acid, and the compound of the element "X" may be mixed at once; or an aqueous sodium hydroxide solution and the compound of the element "X" may be mixed.

The compound of the element "X" is mixed so that a ratio of the mole number of an atom of "X" to the mole number of an atom of bismuth (i.e., a "X/Bi" molar ratio) is preferably a range from more than 0 to 10 or less, more preferably a range from more than 0 to 8 or less, and furthermore preferably a range from more than 0 to 5 or less.

After the heating step, arbitrarily, the mixed solution may be evaporated to dryness or solid-liquid separated. In the solid-liquid separation, a known filtration method can be used, and for example, a pressure filtration apparatus such as a rotary press or a filter press, each of which is usually industrially used; a vacuum filtration device such as a Nutsche or Moore filter; or the like can be used. Further, centrifugation or the like can also be used. At that time, washing with pure water or the like may be performed arbitrarily.

Also, a step of drying the solid content obtained by the above solid-liquid separation may be included. In a case of including the drying step, the drying temperature and the drying time can be set arbitrarily. For example, the drying temperature is preferably a range from 30°C or more to 120°C or less, and the drying time is preferably a range from 0.5 hours or more to 10 hours or less. In the drying step, for example, a dryer, an oven, an electric furnace, spray-dry, a freeze dryer, a vacuum dryer, or the like can be used.

The particle size of the bismuth sulfide particle produced according to the above method may be appropriately adjusted by means of a known crusher, classifying machine, or the like.

The bismuth sulfide particle produced according to the method as described above can be confirmed to be bismuth sulfide by means of an X-ray diffraction method or the like. For example, the produced bismuth sulfide particle can be identified on the basis of the spectrum measured by means of an X-ray diffractometer, specifically "Ultima IV" (trade name, manufactured by Rigaku Corporation).

Since the bismuth sulfide particle according to the present invention has a high blackness, the bismuth sulfide particle can be used as a black pigment. Also, since the bismuth sulfide particle according to the present invention has infrared reflectivity, the bismuth sulfide particle can be used as an infrared reflective material. In a case of using the bismuth sulfide particle as a black pigment or an infrared reflective material, the bismuth sulfide particle according to the present invention may be used in combination with another coloring agent or infrared reflection material. The "infrared rays" herein means electromagnetic waves at a wavelength of a range from 780 nm to 2500 nm.

Also, since the bismuth sulfide particle according to the present invention reflects a laser with a wavelength in the infrared region (for example, a wavelength of 905 nm and/or 1550 nm) used in LiDAR, the bismuth sulfide particle can be suitably used also as a laser reflective material for LiDAR.

Further, since the bismuth sulfide particle according to the present invention has matting performance, the bismuth sulfide particle can be used as a matting pigment. In a case where the bismuth sulfide particle according to the present invention is mixed as the matting pigment, conventional matting pigments, coloring agents, additive agents, dispersants, and the like may also be mixed.

The bismuth sulfide particle and the infrared reflective material containing the above bismuth sulfide particle according to the present invention, can be mixed with a solvent to form a dispersion or a suspension (i.e., solvent composition). Examples of the solvent used as the dispersion or the suspension include the following: a water solvent; a non-aqueous solvent such as an alcohol (e.g., a methanol, an ethanol, a butanol, a 2-propanol, an ethylene glycol, or the like), an ester (e.g., an ethyl acetate or the like), an ether (a butyl cellosolve, a propylene glycol-1-monomethyl ether, or the like), a ketone (e.g., an acetone, a methyl ethyl ketone, or the like), an aromatic hydrocarbon (e.g., a toluene, a xylene, a mineral spirit, or the like), or an aliphatic hydrocarbon; and a mixed solvent thereof. The dispersion or the suspension may arbitrarily contain an additive agent such as a dispersant, an emulsifier, an anti-freezing agent, a pH adjusting agent, a thickener, or a defoamer. The bismuth sulfide concentration in such a solvent composition can be appropriately adjusted.

Also, the above-described solvent composition may be directly applied to a substrate and dried to form a film. As the method for applying the solvent composition to a substrate, a general method such as a spin coating, a spray coating, a roller coating, a dip coating, a flow coating, a knife coating, an electrostatic coating, a bar coating, a die coating, a brush coating, or a dropping droplet can be used without any limitation. The instrument used in the application of the solvent composition can be appropriately selected from known instruments of a spray gun, a roller, a brush, a bar coater, a doctor blade, and the like. Also, examples of the substrate include a ceramic product, a glass product, a metal product, a plastic product, and a paper product.

In the mixing step of preparing the above dispersion or suspension, a known blender can be used. Also, during the mixing step, the dispersion or suspension may be deforming as necessary. Examples of the blender include a two-shaft mixer, a three-roll, a sand mill, and a planetary mixer, which are usually industrially used. In a case where the blender is used on a laboratory scale, an agitator, a hybrid mixer (i.e., planetary centrifugal mixer), a homogenizer, a paint shaker, or the like can be used. In this case, a crushing medium containing glass, alumina, zirconia, zirconium silicate, or the like as the component may be arbitrarily used.

Further, when the dispersion or suspension is prepared, a solid-liquid separation step may be included, and the above mixing step and the above solid-liquid separation step may be performed repeatedly. In the solid-liquid separation step, a known filtration method can be used, and for example, a pressure filtration device such as a rotary press or a filter press, each of which is usually industrially used, or a vacuum filtration device such as a Nutsche or Moore filter can be used. Further, centrifugation or the like can also be used.

The bismuth sulfide particle according to the present invention and an infrared reflective material containing the above bismuth sulfide particle can be mixed with a resin to be prepared as a resin composition. Examples of the resin used in the above resin composition include the following ones, but the resin is not particularly limited to them.

Examples of the thermoplastic resin include the following:

(1) a general-purpose plastic resin (for example, (a) a polyolefin resin (such as a polyethylene or a polypropylene), (b) a polyvinyl chloride resin, (c) an acrylonitrile-butadienestyrene resin, (d) a polystyrene resin, (e) a methacrylic resin, (f) a polyvinylidene chloride resin, or the like),

(2) an engineering plastic resin (for example, (a) a polycarbonate resin, (b) a polyethylene terephthalate resin, (c) a polyamide resin, (d) a polyacetal resin, (e) a modified-polyphenylene ether, (f) a fluorine resin, or the like),

(3) a super engineering plastic resin (for example, (a) a polyphenylene sulfide resin (i.e., PP), (b) a polysulfone resin (i.e., PSF), (c) a polyether sulfone resin (i.e., PES), (d) an amorphous polyarylate resin (i.e., PAR), (e) a liquid crystal polymer (i.e., LCP), (f) a polyether ether ketone resin (i.e., PEEK), (g) a polyamideimide resin (i.e., PAI), (h) a polyetherimide resin (i.e., PEI), or the like).

Examples of the thermosetting resin include the following: (a) an epoxy resin, (b) a phenol resin, (c) an unsaturated polyester resin, (d) a polyurethane resin, (e) a melamine resin, (f) a silicone resin.

Examples of the thermoplastic elastomer include a styrene-based elastomer, an olefin/alkene-based elastomer, a vinyl chloride-based elastomer, a urethane-based elastomer, and an amide-based elastomer.

Also, in the above resin composition, various additive agents such as a lubricant, a light stabilizer, an antistatic agent, a disinfectant, a dispersant, a filler, a flame retardant, an anti-freezing agent, a pH adjusting agent, a thickener, a UV absorber, and an antioxidant can be arbitrarily contained. The bismuth sulfide concentration in such a resin composition can be appropriately adjusted, and the resin composition can also be prepared as a high-concentration masterbatch.

The above resin composition is obtained by mixing the bismuth sulfide particle according to the present invention with a melted resin by means of a kneader. The kneader may be one that is generally used, and examples of the kneader include a single-screw extruder, a twin-screw extruder, an intensive mixer such as a Bunbury mixer, and a roll former.

The bismuth sulfide particle according to the present invention, and a black pigment, a matting pigment, an infrared reflective material, and a laser reflective material for LiDAR, each of which contains the above bismuth sulfide particle, can be mixed with a resin for a paint to be prepared as a paint composition. The resin for a paint is not particularly limited as long as it is generally used in paint applications, and as the resin for a paint, various kinds of resins for a paint, for example, a phenol resin, an alkyd resin, an acrylic alkyd resin, an acrylic resin, an acrylic emulsion resin, a polyester resin, a polyester urethane resin, a polyether resin, a polyolefin resin, a polyurethane resin, an acrylic urethane resin, an epoxy resin, a modified epoxy resin, a silicone resin, an acrylic silicone resin, a fluorine resin, an ethylene-vinyl acetate copolymer, an acrylic-styrene copolymer, an amino resin, a methacrylic resin, a polycarbonate resin, a polyvinyl chloride resin, and the like can be used.

The paint composition according to the present invention can arbitrarily contain various kinds of additive agents, a solvent, and the like. Examples of the additive agent include a dispersant, an emulsifier, an anti-freezing agent, a pH adjusting agent, a thickener, a defoamer, and a film-forming auxiliary, which are generally used. Examples of the solvent include the following: a water solvent; a non-aqueous solvent such as an alcohol (e.g., a methanol, a butanol, an ethylene glycol, or the like), an ester (e.g., an ethyl acetate or the like), an ether, a ketone (e.g., an acetone, a methyl ethyl ketone, or the like), an aromatic hydrocarbon (e.g., a toluene, a xylene, a mineral spirit, or the like), or an aliphatic hydrocarbon; and a mixed solvent thereof. The bismuth sulfide concentration in such a paint composition can be appropriately adjusted.

In the step of mixing with the above resin, a similar method to the mixing step at the time of preparing the above dispersion or suspension can be used.

By applying the solvent composition or paint composition according to the present invention to a substrate and curing the composition, a paint film can be obtained. The paint film can be used as a black paint film, an infrared reflection paint film, or an infrared shielding paint film. Also, the paint film can be used as a heat-shielding paint film.

As the method for applying the solvent composition or paint composition according to the present invention to a substrate, a general method such as a spin coating, a spray coating, a roller coating, a dip coating, a flow coating, a knife coating, an electrostatic coating, a bar coating, a die coating, a brush coating, or a dropping droplet can be used without any limitation. The instrument used in the application of the solvent composition or the paint composition can be appropriately selected from known instruments of a spray gun, a roller, a brush, a bar coater, a doctor blade, and the like. After the application, by drying and curing the composition, a paint film can be obtained. Also, baking may be performed after the drying. The baking conditions can be appropriately set, and for example, the baking time can be set to a level from 1 to 120 minutes in the temperature range from 40°C or more to 200°C or less in an oxidizing atmosphere. With such setting conditions, sufficient baking can be performed in a drying furnace of coil coating line.

Examples of the substrate to which the solvent composition or the paint composition is applied include a ceramic product, a glass product, a metal product, a plastic product, and a paper product.

In the paint film according to the present invention, by setting the bismuth sulfide of the present invention to a paint film that is used for a black pigment, the L* value of the paint film in the L*a*b* color system can be 10.0 or less, and preferably 5.0 or less. The L* value herein is an index indicating the lightness of CIE 1976 Lab (i.e., L*a*b* color system). The smaller the L* value, the lower the lightness. This indicates that the smaller the L* value, the higher the blackness of the bismuth sulfide particles. This means that black pigments, paints, and coating films containing bismuth sulfide particle have a high blackness (an index of blackness). The expression "CIE 1976 Lab (i.e., L*a*b* color system)" is referred to as a color space recommended by the CIE (i.e., the Commission Internationale de L'Eclairage) in 1976, and is sometimes abbreviated as CIELAB.

In a case of measuring the L* value of the paint film, a paint composition having a pigment weight concentration (i.e., PWC) of 50.00% is prepared, and the prepared paint composition is applied to a black-and-white chart sheet by means of an 8-mil applicator to form a paint film on it. On the formed paint film, a clear paint is applied by means of an 8-mil applicator to form a clear paint film. As for the paint film on a white background, the L* value at an acceptance angle of 45° is measured by means of a color-difference meter. As the color-difference meter, for example, a multiangle colorimeter, specifically "BYK-Maci" (trade name, manufactured by BYK-GARDNER) or the like can be used.

Also, in the paint film using the bismuth sulfide particle according to the present invention, the a* value of the paint film can be a value between -2.0 or more and 2.0 or less and the b* value of the paint film can be a value between -3.0 or more and 4.5 or less in the L*a*b* color system. Such a paint film using the bismuth sulfide particle according to the present invention can be a paint film having blackness with reduced reddish, greenish, yellowish, and bluish. The a* and b* values herein are indexes indicating the hue and saturation in the L*a*b* color system. The a* value indicates that the larger to the positive side the value is, the stronger the reddish is, and the larger to the negative side the value is, the stronger the greenish is. Further, the b* value indicates that the larger to the positive side the value is, the stronger the yellowish is, and the larger to the negative side the value is, the stronger the bluish is. The above a* and b* values can be measured in the same manner to the L* value.

Also, the paint film according to the present invention has an infrared reflection characteristic by containing the bismuth sulfide particle according to the present invention.

Further, the solar reflectance of the above paint film can be 25.0% or more, and preferably 35.0% or more. With such a value, it can be said that the heat shielding of the above paint film is sufficiently high. The solar reflectance can be calculated in accordance with JIS K 5602 from the reflectance at a wavelength of a range from 780 nm to 2500 nm.

In a case of measuring the reflectance of the paint film, for example, a paint film is formed on a black-and-white chart sheet in the same manner to the case of measuring the L* value of a paint film. As for the paint film formed on a white background of the black-and-white chart sheet, the reflectance is measured by means of a spectrophotometer. As the spectrophotometer, for example, a UV-Visible/NIR spectrophotometer, specifically "V-670" (trade name, manufactured by JASCO Corporation) or the like can be used.

It is preferable that the paint film according to the present invention contains the bismuth sulfide particle according to the present invention at a pigment volume concentration (PVC) of a range from 15% or more to 95% or less. Such a paint film can have a specular gloss of 5 or less under the geometric condition of 60° measured in accordance with JIS K5600-4-7:1999, and can be a so-called matte paint film. Also, the specular gloss of 85° can be 30 or less, and a so-called bottom gloss can be sufficiently reduced. The above PVC is more preferably a range from 30% or more to 70% or less, and furthermore preferably 30% or more to 50% or less.

In a case of measuring the specular gloss of the paint film, for example, a paint composition having a pigment volume concentration (PVC) of from 15 to 95% is prepared, and the prepared paint composition is applied on a tin plate by means of an 8-mil applicator to form a paint film on it. The gloss values at 20°, 60°, and 85° of the paint film are measured by means of a haze-gloss meter. As the haze-gloss meter, for example, "Cat. No. 4601" (manufactured by BYK-GARDNER) or the like can be used.

**EXAMPLES**

Examples of the present invention will be described hereinafter, but the present invention is not limited to the Examples.

(Example 1)

<Preparation of bismuth hydroxide>

116.8 g of a 60% by mass nitric acid (manufactured by NACALAI TESQUE, INC.) was added to 277.6 g of pure water (at room temperature, specifically at temperature of a range from 5 to 30°C), and thereto was further added 146.1 g of a bismuth nitrate pentahydrate (manufactured by KANTO CHEMICAL CO., INC.), and then they were mixed. To this mixed solution was added 1459.5 g of pure water at room temperature (specifically at temperature of a range from 5 to 30°C) to prepare a bismuth nitrate mixed solution. The above bismuth nitrate mixed solution and a 3 N aqueous sodium hydroxide solution were added to 4 L of pure water heated to 70°C while maintaining the pH to a range from 6.5 to 7.5. After that, the obtained mixed solution was aged for 10 minutes to prepare a mixed solution containing bismuth hydroxide, the mixed solution was subjected to solid-liquid separation by means of suction filtration, and the obtained solid content was washed with pure water and collected as bismuth hydroxide.

<Preparation of bismuth sulfide>

Pure water was added to the bismuth hydroxide obtained as above at room temperature (specifically at temperature of a range from 5 to 30°C) to prepare 32 mL of a 0.96 mol/L bismuth hydroxide slurry. Also, pure water was added to 40 g of a polyvinyl alcohol with a polymerization degree of 1500 (manufactured by FUJIFILM Wako Pure Chemical Corporation) at room temperature (specifically at temperature of a range from 5 to 30°C) to prepare 506 mL of a 102.8 g/L polyvinyl alcohol aqueous solution. Also, pure water was added to a sodium thiosulfate (manufactured by NACALAI TESQUE, INC.) at room temperature (specifically at temperature of a range from 5 to 30°C) to prepare 85 mL of a 1.88 mol/L aqueous sodium thiosulfate solution.

Next, to the polyvinyl alcohol aqueous solution described above were added the above aqueous sodium thiosulfate solution and the above bismuth hydroxide slurry in this order while stirring. The "SBi" molar ratio in these mixing amounts was 5, and the amount of the polyvinyl alcohol to be added was 500% by mass with regard to the bismuth hydroxide. To the obtained mixed solution was added 20 g of a 30% by mass nitric acid. The pH of the mixed solution after the addition of the nitric acid was 1.95. The obtained mixed solution was heated to 70°C, and stirred for 2 hours to obtain black precipitate of a bismuth sulfide. The black precipitate was collected by means of suction filtration, and washed with pure water to obtain the bismuth sulfide (Sample 1). When the carbon content of the "Sample 1" obtained was measured by means of an automatic elemental analyzer described later, the carbon content was 1.88% by mass.

(Example 2)

A bismuth sulfide (Sample 2) was obtained in the same manner to the "Example 1" except that the amount of a polyvinyl alcohol with a polymerization degree of 1500 (manufactured by FUJIFILM Wako Pure Chemical Corporation) in the "Example 1" was set to 60 g and the concentration thereof was set to 154.2 g/L. The amount of the polyvinyl alcohol to be added was 750% by mass with regard to the bismuth hydroxide. When the carbon content of the "Sample 2" obtained was measured by means of an automatic elemental analyzer described later, the carbon content was 2.25% by mass.

(Example 3)

A bismuth sulfide (Sample 3) was obtained in the same manner to the "Example 1" except that the amount of a polyvinyl alcohol with a polymerization degree of 1500 (manufactured by FUJIFILM Wako Pure Chemical Corporation) in the "Example 1" was set to 80 g and the concentration thereof was set to 205.6 g/L. The amount of the polyvinyl alcohol to be added was 1000% by mass with regard to the bismuth hydroxide. When the carbon content of the "Sample 3" obtained was measured by means of an automatic elemental analyzer described later, the carbon content was 3.19% by mass.

(Example 4)

A bismuth sulfide (Sample 4) was obtained in the same manner to the "Example 1" except that the polyvinyl alcohol with a polymerization degree of 1500 (manufactured by FUJIFILM Wako Pure Chemical Corporation) in the "Example 1" was changed to a polyvinyl alcohol with an average molecular weight of 125000 (manufactured by Poly-Science). The amount of the polyvinyl alcohol to be added in the mixing amounts was 500% by mass with regard to the bismuth hydroxide. When the carbon content of the "Sample 4" obtained was measured by means of an automatic elemental analyzer described later, the carbon content was 2.27% by mass.

(Example 5)

A bismuth sulfide (Sample 5) was obtained in the same manner to the "Example 1" except that the polyvinyl alcohol with a polymerization degree of 1500 (manufactured by FUJIFILM Wako Pure Chemical Corporation) in the "Example 1" was changed to a polyethylene glycol with an average molecular weight of 20000 (manufactured by FUJIFILM Wako Pure Chemical Corporation), the amount thereof to be added was set to 240 g, and the concentration was set to 616.7g/L. The amount of the polyethylene glycol to be added in the mixing amounts was 3000% by mass with regard to the bismuth hydroxide. When the carbon content of the "Sample 5" obtained was measured by means of an automatic elemental analyzer described later, the carbon content was 0.77% by mass.

(Example 6)

Pure water was added to the bismuth hydroxide obtained in the above "<Preparation of bismuth hydroxide>" of the "Example 1" at room temperature (specifically at temperature of a range from 5 to 30°C) to prepare 32 mL of a 0.96 mol/L bismuth hydroxide slurry. Also, pure water was added to 40 g of a polyvinyl alcohol with a polymerization degree of 1500 (manufactured by FUJIFILM Wako Pure Chemical Corporation) at room temperature (specifically at temperature of a range from 5 to 30°C) to prepare 506 mL of a 102.8 g/L polyvinyl alcohol aqueous solution. Also, pure water was added to a sodium thiosulfate (manufactured by NACALAI TESQUE, INC.) at room temperature (specifically at temperature of a range from 5 to 30°C) to prepare 85 mL of a 1.88 mol/L aqueous sodium thiosulfate solution.

Next, the temperature of the polyvinyl alcohol aqueous solution was adjusted to 20°C, and thereto was added the above bismuth hydroxide slurry while stirring. Subsequently, to the obtained mixed solution was added the above aqueous sodium thiosulfate solution while stirring. The "SBi" molar ratio in these mixing amounts was 5, and the amount of the polyvinyl alcohol to be added was 500% by mass with regard to the bismuth hydroxide. Thereto was added 20 g of a 30% by mass nitric acid. The pH of the mixed solution after the addition of the nitric acid was 1.95. After the addition of the nitric acid, the mixed solution was stirred for 4 hours while maintaining the temperature of the mixed solution at 20°C (i.e., the maintaining step). The obtained mixed solution was heated to 70°C, and stirred for 2 hours (i.e., the heating step) to obtain black precipitate of a bismuth sulfide. To the aqueous solution containing the black precipitate was added 2440 g of pure water, the obtained solution was stirred, and then centrifuged under the conditions of 10000 rpm for 10 minutes by means of a high-speed refrigerated centrifuge, specifically "himac CR21GII" (manufactured by Hitachi Construction Machinery Co., Ltd.), the supernatant was discarded, 2440 g of pure water was added to the remaining precipitation, the obtained solution was stirred, and from the stirred solution, the black precipitate was collected by means of suction filtration and washed with pure water to obtain the bismuth sulfide (Sample 6).

(Example 7)

A bismuth sulfide (Sample 7) was obtained in the same manner to the "Example 6" except that the stirring time of the mixed solution after the addition of the nitric acid was changed from 4 hours to 17 hours in the "Example 6".

(Example 8)

A bismuth sulfide (Sample 8) was obtained in the same manner to the "Example 6" except that the temperature of the polyvinyl alcohol aqueous solution and the temperature of the mixed solution after the addition of nitric acid in the "Example 6" were changed from 20°C to 15°C, and the stirring time of the mixed solution after the addition of the nitric acid in the "Example 6" was changed from 4 hours to 17 hours.

(Example 9)

A bismuth sulfide (Sample 9) was obtained in the same manner to the "Example 6" except that the temperature of the polyvinyl alcohol aqueous solution and the temperature of the mixed solution after the addition of the nitric acid in the "Example 6" were changed from 20°C to 28°C, and the stirring time of the mixed solution after the addition of the nitric acid in the "Example 6" was changed from 4 hours to 17 hours.

(Example 10)

A bismuth sulfide (Sample 10) was obtained in the same manner to the "Example 6" except that the temperature of the polyvinyl alcohol aqueous solution and the temperature of the mixed solution after the addition of the nitric acid in the "Example 6" were changed from 20°C to 40°C, and the stirring time of the mixed solution after the addition of the nitric acid in the "Example 6" was changed from 4 hours to 17 hours.

(Example 11)

A bismuth sulfide (Sample 11) was obtained in the same manner to the "Example 6" except that the temperature of the polyvinyl alcohol aqueous solution and the temperature of the mixed solution after the addition of the nitric acid in the "Example 6" were changed from 20°C to 28°C, and the stirring time of the mixed solution after the addition of the nitric acid in the "Example 6" was changed from 4 hours to 2 hours.

(Example 12)

A bismuth sulfide (Sample 12) was obtained in the same manner to the "Example 6" except that the bismuth hydroxide in the "Example 6" was changed to bismuth oxide (manufactured by KANTO CHEMICAL CO., INC.).

(Example 13)

<Preparation of Al-containing bismuth hydroxide>

116.8 g of a 60% by mass nitric acid (manufactured by NACALAI TESQUE, INC.) was added to 277.6 g of pure water at room temperature (specifically at temperature of a range from 5 to 30°C), and thereto were further added 146.1 g of a bismuth nitrate pentahydrate (manufactured by KANTO CHEMICAL CO., INC.) and 0.123 g of a sodium aluminate (Wako first grade, manufactured by FUJIFILM Wako Pure Chemical Corporation), and then they were mixed. The ratio of the mole number of an atom of Al to the mole number of an atom of bismuth (i.e., the "Al/Bi" molar ratio) in this case was 0.5. To the mixed solution was added 1459.5 g of pure water at room temperature (specifically at temperature of a range from 5 to 30°C) to prepare a bismuth nitrate mixed solution. To 4 L of pure water heated to 70°C were added the above bismuth nitrate mixed solution and a 3 N aqueous sodium hydroxide solution while maintaining the pH to a range from 6.5 to 7.5. After that, the obtained mixed solution was aged for 10 minutes to prepare a suspension containing Al-containing bismuth hydroxide, the suspension was subjected to solid-liquid separation by means of suction filtration, and the obtained solid content was washed with pure water and collected as Al-containing bismuth hydroxide (Sample A).

<Preparation of Al-containing bismuth sulfide>

Pure water was added to the "Sample A" at room temperature (specifically at temperature of a range from 5 to 30°C) to prepare 32 mL of a 0.96 mol/L Al-containing bismuth hydroxide slurry. Also, pure water was added to 40 g of a polyvinyl alcohol with a polymerization degree of 1500 (manufactured by FUJIFILM Wako Pure Chemical Corporation) at room temperature (specifically at temperature of a range from 5 to 30°C) to prepare 506 mL of a 102.8 g/L polyvinyl alcohol aqueous solution. Also, pure water was added to a sodium thiosulfate (manufactured by NACALAI TESQUE, INC.) at room temperature (specifically at temperature of a range from 5 to 30°C) to prepare 85 mL of a 1.88 mol/L aqueous sodium thiosulfate solution.

Next, the temperature of the polyvinyl alcohol aqueous solution was adjusted to 20°C, and thereto was added the above Al-containing bismuth hydroxide slurry while stirring. Subsequently, to the obtained mixed solution was added the aqueous sodium thiosulfate solution while stirring. The "S/Bi" molar ratio in these mixing amounts was 5, and the amount of the polyvinyl alcohol to be added was 500% by mass with regard to the Al-containing bismuth hydroxide. Thereto was added 20 g of a 30% by mass nitric acid. The pH of the mixed solution after the addition of the nitric acid was 1.95. After the addition of the nitric acid, the mixed solution was stirred for 17 hours while maintaining the temperature of the mixed solution at 20°C (i.e., the maintaining step). The obtained mixed solution was heated to 70°C, and stirred for 2 hours (i.e., the heating step) to obtain black precipitate of an Al-containing bismuth sulfide. To the aqueous solution containing the black precipitate was added 2440 g of pure water, the obtained solution was stirred, and then centrifuged at 10000 rpm for 10 minutes by means of a high-speed refrigerated centrifuge, specifically "himac CR21GII" (manufactured by Hitachi Construction Machinery Co., Ltd.), the supernatant was discarded, 2440 g of pure water was added to the remaining precipitation, the obtained solution was stirred, and from the stirred solution, the black precipitate was collected by means of suction filtration and washed with pure water to obtain the Al-containing bismuth sulfide (Sample 13).

The obtained the Al-containing bismuth sulfide particles were dried at 100°C for 3 hours to obtain a dry powder. The dry powder was sufficiently crushed in an agate mortar, and then the crushed dry powder was packed in an aluminum ring and compression-molded by means of a hydraulic press machine. When the compression-molded one was measured by means of a fluorescent X-ray analyzer, specifically "ZSX (registered trademark) Primus IV" (manufactured by Rigaku Corporation), the "Al/Bi" molar ratio was 0.003.

(Example 14)

<Preparation of Al-containing bismuth hydroxide>

An Al-containing bismuth hydroxide (Sample B) was obtained in the same manner to the preparation of the Al-containing bismuth hydroxide of the "Sample A" except that 0.123 g of a sodium aluminate (Wako first grade, manufactured by FUJIFILM Wako Pure Chemical Corporation) in the preparation of the Al-containing bismuth hydroxide of the "Example 13" was changed to 0.493 g. The ratio of the mole number of an atom of Al to the mole number of an atom of bismuth (i.e., the "Al/Bi" molar ratio) in this case was 2.0.

<Preparation of Al-containing bismuth sulfide>

An Al-containing bismuth sulfide (Sample 14) was obtained in the same manner to the preparation of the Al-containing bismuth sulfide of the "Example 13" except that the "Sample A" in the preparation of the Al-containing bismuth sulfide of the "Example 13" was changed to the above "Sample B". The "Al/Bi" molar ratio of the obtained Al-containing bismuth sulfide was 0.010.

(Example 15)

<Preparation of Ce-containing bismuth hydroxide>

A Ce-containing bismuth hydroxide (Sample C) was obtained in the same manner to the preparation of the Al-containing bismuth hydroxide of the "Example 13" except that 0.123 g of a sodium aluminate (Wako first grade, manufactured by FUJIFILM Wako Pure Chemical Corporation) in the preparation of the Al-containing bismuth hydroxide of the "Example 13" was changed to 2.616 g of a cerium(III) nitrate hexahydrate (Wako special grade, manufactured by FUJIFILM Wako Pure Chemical Corporation). The ratio of the mole number of an atom of Ce to the mole number of an atom of bismuth (i.e., the "Ce/Bi" molar ratio) in this case was 2.0.

<Preparation of Ce-containing bismuth sulfide>

A Ce-containing bismuth sulfide (Sample 15) was obtained in the same manner to the preparation of the Al-containing bismuth sulfide of the "Example 13" except that the "Sample A" in the preparation of the Al-containing bismuth sulfide of the "Example 13" was changed to the above "Sample C". The "Ce/Bi" molar ratio of the obtained Ce-containing bismuth sulfide was 0.004.

(Example 16)

<Preparation of Ce-containing bismuth sulfide>

Pure water was added to the bismuth hydroxide obtained in the preparation of the bismuth hydroxide of "Example 1" at room temperature (specifically at temperature of a range from 5 to 30°C) to prepare 32 mL of a 0.96 mol/L bismuth hydroxide slurry. Also, pure water was added to 40 g of a polyvinyl alcohol with a polymerization degree of 1500 (manufactured by FUJIFILM Wako Pure Chemical Corporation) at room temperature (specifically at temperature of a range from 5 to 30°C) to prepare 506 mL of a 102.8 g/L polyvinyl alcohol aqueous solution. Also, pure water was added to a sodium thiosulfate (manufactured by NACALAI TESQUE, INC.) at room temperature (specifically at temperature of a range from 5 to 30°C) to prepare 85 mL of a 1.88 mol/L aqueous sodium thiosulfate solution. Also, 0.67 g of a cerium(III) nitrate hexahydrate (Wako special grade, manufactured by FUJIFILM Wako Pure Chemical Corporation) was dissolved in 20 g of a 30% by mass nitric acid to prepare a cerium nitrate aqueous solution.
The temperature of the above polyvinyl alcohol aqueous solution was adjusted to 20°C, and thereto was added the bismuth hydroxide slurry while stirring. Next, to the obtained mixed solution was added the aqueous sodium thiosulfate solution while stirring. The "S/Bi" molar ratio in these mixing amounts was 5, and the amount of the polyvinyl alcohol to be added was 500% by mass with regard to the bismuth hydroxide. Next, to the obtained mixed solution was added the above cerium nitrate aqueous solution while stirring. The pH of the mixed solution after the addition of the cerium nitrate aqueous solution was 1.95. The ratio of the mole number of an atom of Ce to the mole number of an atom of bismuth (i.e., the "Ce/Bi" molar ratio) in this case was 5.0. After the addition of the nitric acid, the mixed solution was stirred for 17 hours while maintaining the temperature of the mixed solution at 20°C (i.e., the maintaining step). The obtained mixed solution was heated to 70°C, and stirred for 2 hours (i.e., the heating step) to obtain black precipitate of a Ce-containing bismuth sulfide. To the aqueous solution containing the black precipitate was added 2440 g of pure water, the obtained solution was stirred, and then centrifuged at 10000 rpm for 10 minutes by means of a high-speed refrigerated centrifuge, specifically "himac CR21GII" (manufactured by Hitachi Construction Machinery Co., Ltd.), the supernatant was discarded, 2440 g of pure water was added to the remaining precipitation, the obtained solution was stirred, and from the stirred solution, the black precipitate was collected by means of suction filtration and washed with pure water to obtain the Ce-containing bismuth sulfide (Sample 16). The "Ce/Bi" molar ratio of the obtained Ce-containing bismuth sulfide was 0.005.

(Comparative Example 1)

Pure water was added to bismuth hydroxide at room temperature (specifically at temperature of a range from 5 to 30°C) to prepare 356.8 mL of a 0.08 mol/L bismuth hydroxide slurry. Also, pure water was added to a sodium thiosulfate (manufactured by NACALAI TESQUE, INC.) at room temperature (specifically at temperature of a range from 5 to 30°C) to prepare 223.5 mL of a 0.68 mol/L aqueous sodium thiosulfate solution. Next, the aqueous sodium thiosulfate solution was added into the bismuth hydroxide slurry. To the obtained mixed solution was added 20 g of a 30% by mass nitric acid. The pH of the mixed solution after the addition of the nitric acid was 2.00. The obtained mixed solution was heated to 70°C, and stirred for 2 hours to obtain black precipitate of a bismuth sulfide. The bismuth sulfide was collected by means of suction filtration, and washed with pure water to obtain the bismuth sulfide (Sample 17).

<Particle-size distribution measurement>

After the addition of 20 ml of pure water to 1.0 g of a sample, the dispersion was performed for one minute by means of an ultrasonic washing machine, specifically "UT-305" (manufactured by SHARP Corporation) to prepare a dispersion. The particle-size distribution of the dispersion was measured by means of a laser diffraction/scattering particle-size distribution analyzer, specifically "LA-950" (manufactured by HORIBA, Ltd.) under the following conditions. The volume-based cumulative particle-size distribution of the "Sample 1" measured by means of a laser diffraction/scattering particle-size distribution analyzer is shown in FIG. 2.

Sample refractive index: 2.13 (bismuth sulfide)
Solvent refractive index: 1.33 (pure water)
Circulation speed: 10
Ultrasonic intensity: 1
Ultrasonic time: 2 minutes
Stirring intensity: 10
Transmittance (R) to laser light (650 nm): 95 to 70%
Transmittance (B) to LED light (405 nm): 90 to 80%

<Cumulative 50% particle size (D1) in volume-based cumulative particle-size distribution of bismuth sulfide particles>

Based on the particle-size distribution obtained as above, the cumulative 50% particle size (D1) in volume-based cumulative particle-size distribution of the bismuth sulfide particles was calculated.

<Measurement of primary particle diameter>

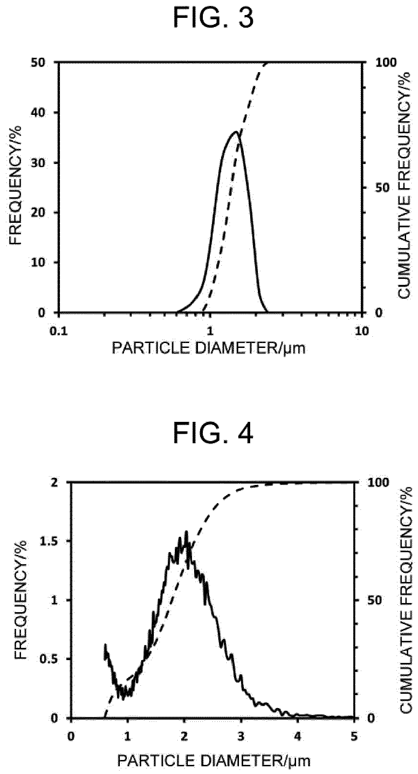

Each of the above-described samples was dried at 100°C for 3 hours to obtain a dry powder. The dry powder was observed by means of a scanning electron microscope, specifically "S-4800" (manufactured by Hitachi High-Technologies Corporation), and 100 primary particles of the bismuth sulfide were selected. Then, the longest straight portion of each of these primary particles was measured. The number-based cumulative particle-size distribution measured by means of a scanning electron microscope of the "Sample 1" is shown in FIG. 3.

<Cumulative 50% particle diameter (D2) in number-based cumulative particle-size distribution of primary particle>

Based on the primary particle diameter obtained above, the cumulative 50% particle diameter (D2) in the number-based cumulative particle-size distribution of primary particles was calculated.

<Particle-size distribution measurement with Coulter counter-type particle-size distribution analyzer >

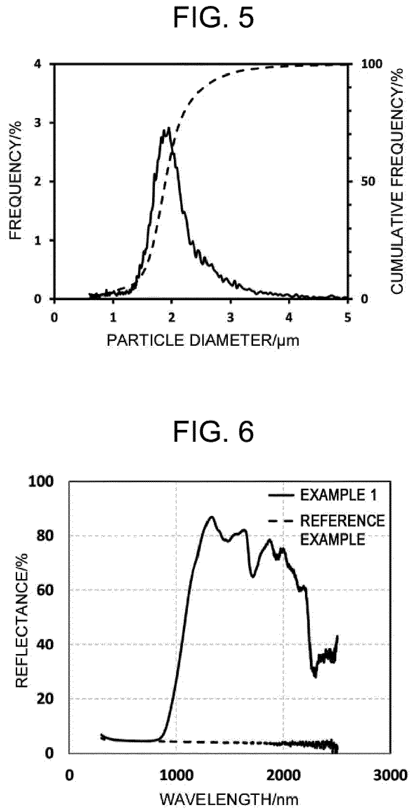

7920 g of the "ISOTON (registered trademark) II diluent" (manufactured by Beckman Coulter, Inc.) was mixed with 80 g of the "NOPCOSPERSE (registered trademark) 5600" (manufactured by SAN NOPCO LIMITED), and the obtained mixture was stirred for one hour or more. After the stirring, filtration was performed by means of a 0.45-$\mu$m membrane filter (specifically "JHWP09025 2-3051-16" manufactured by Merck KGaA) to prepare an electrolyte solution.
A sample was weighed so as to be equivalent to 0.1 g in terms of the solid content, and was mixed with the above electrolyte solution to prepare 20.0 g of sample mixture. The dispersion of the above sample mixed solution was performed for 5 minutes by means of an ultrasonic disperser (specifically, 360W, "AU-180C EYELA" (registered trademark) manufactured by TOKYO RIKAKIKAI CO., LTD.) to prepare a dispersion liquid. 2.0 g of the above dispersion liquid was weighed, and mixed with 18.0 g of the above electrolyte solution to prepare a diluent. 3 cc of the diluent was taken out, and mixed with 200 g of the above electrolyte solution to prepare a measurement sample. The measurement sample was measured by means of "MultisiZer 4" (manufactured by Beckman Coulter, Inc.) as a measuring device while stirring. The detailed measurement conditions are as follows. The number-based cumulative particle-size distributions of the "Sample 1" and the "Sample 6" measured by means of a Coulter counter-type particle-size distribution analyzer are shown in FIGs. 4 and 5.

Aperture: 30 $\mu$m
Measuring particle size range: 0.6 to 18 $\mu$m
Measurement conditions: 80 $\mu$L quantification

<Difference between cumulative 90% particle size (D90) and cumulative 10% particle size (D10) to cumulative 50% particle size (D50) in number-based cumulative particle-size distribution (D3)>

From the number-based cumulative particle-size distribution chart measured by means of a Coulter counter-type particle-size distribution analyzer obtained as above, each value of the cumulative 10% particle size (D10), the cumulative 50% particle size (D50), and the cumulative 90% particle size (D90) was calculated, and the "D3" was calculated by the following Formula (1).

$$D3 = (D90 - D10)/D50 \ (1)$$

<Method for measuring carbon content>

A sample was dried at 100°C for 3 hours to obtain a dry powder. A carbon content of the dry powder was measured by means of an automatic elemental analyzer, specifically "Vario EL cube" (manufactured by Elementar) under the conditions of a combustion tube temperature of 950°C and a reduction tube temperature of 600°C.

<Measurement of powder X-ray diffraction spectrum>

A sample was dried at 100°C for 3 hours to obtain a dry powder. After the dry powder was sufficiently crushed in an agate mortar, the crushed dry powder was placed in a cell for measurement, and measurement was performed by means of a horizontal multipurpose X-ray diffraction apparatus, specifically "Ultima IV" (trade name, manufactured by Rigaku Corporation). The obtained spectrum was collated by means of "ICSD" (i.e., a database of inorganic crystal structures) provided by the Japan Association for International Chemical Information, and the sample was identified. The spectrum was collected under the following measurement conditions.

(1) Optical system

(a) Divergence slit: 1°
(b) Scattering slit: 1°
(c) Receiving slit: 0.15 mm
(d) Monochromatic receiving slit: 0.8 mm

(2) X ray source

(a) Wavelength: CuK$\alpha$ ray 1.541 Å
(b) Tube current: 50 mA
(c) Tube voltage: 50 kV

(3) Measurement range: from 5 to 70 deg.
(4) Scanning method

(a) Scan speed: 5°/minute
(b) Step width: 0.02 deg.

<Preparation of paint>

5.0 g of each of the "Samples 1 to 5" and the "Sample 17" in terms of the solid content was weighed, 11.9 g of the acrylic silicone resin compound (solid content thereof: 42% by mass) listed in Table 1, and 12.0 g of pure water were placed in a glass container, and mixed for 2 minutes by means of a hybrid mixer to prepare a paint. Solid contents of the "Samples 1 to 5" and the "Sample 17" were calculated from the mass difference between before and after drying at 100°C for 1 hour.

[Table 1]

| Material | Product Name | Mixing amount (Parts by mass) |
|---|---|---|
| Acrylic silicone resin | PEGAR (registered trademark) 896 (Manufactured by KOATSU GAS KOGYO CO., LTD.) | 76 |
| Film-forming auxiliary | TEXANOL (Manufactured by Eastman Chemical Company) | 2.9 |
| Defoamer | BYK-024 (Manufactured by BYK) | 0.25 |
| Urethane associative thickener | SN-Thickener 619N (Manufactured by SAN NOPCO LIMITED) | 0.20 |
| Alkali thickener | PRIMAL ASE-60 (Manufactured by The Dow Chemical Company) | 0.25 |

X g of each of the "Samples 6 to 16" was weighed so as to be 5.0 g in terms of the solid content. Further, Y g of an ethanol was weighed so as to be "X + Y = 6.89 (g)". The sample, the ethanol, 16.5 g of the compound listed in Table 2, and 12.0 g of pure water were placed in a glass container, and mixed for 2 minutes with a hybrid mixer to prepare a paint. Solid contents of the "Samples 6 to 16" were calculated from the mass difference between before and after drying at 100°C for 1 hour.

[Table 2]

| Product Name | Mixing amount (g) |
|---|---|
| nax E-CUBE (registered trademark) WB 280 auxiliary clear | 11.0 |
| (Manufactured by Nippon Paint Co., Ltd.) | |
| nax E-CUBE (registered trademark) WB 910 M binder (Manufactured by Nippon Paint Co., Ltd.) | 5.5 |

<Preparation of paint using carbon black (i.e., Reference Example)>

A paint was prepared by using commercially available carbon black (trade name: "MA-100", manufactured by Mitsubishi Chemical Corporation). Specifically, in accordance with Table 3, the materials were placed in a 70mL mayonnaise bottle, and the dispersion was performed by means of a paint conditioner (manufactured by Red Devil Inc.) to prepare a mill base. Next, 20.0 g of an alkyd resin (specifically, "ALUKIDIR (registered trademark) J-524-IM-60" manufactured by DIC Corporation) was added to the above mill base, and the dispersion of the mixture was performed by means of a paint conditioner (manufactured by Red Devil Inc.) to prepare a paint.

[Table 3]

| Product Name | Mixing amount (g) |
|---|---|
| Carbon black (Trade name: MA-100, manufactured by Mitsubishi Chemical Corporation) | 1.75 |
| Amino resin (AMIDIR (registered trademark) J-820-60, manufactured by DIC Corporation) | 6.5 |
| Solvent (Mixture of xylene and n-butanol at 4:1) | 6.7 |

<Preparation of paint film>

A paint using each of the "Samples 1 to 5" and the "Sample 17" was applied on a black and white chart paper (specifically "Form 5C" manufactured by Opacity Chart Leneta Company, Inc.) by means of an 8-mil applicator, and dried at 60°C for 30 minutes to form a paint film on it. Next, the clear compound listed in Table 4 was applied on the above paint film by means of an 8-mil applicator, and dried at 80°C for 30 minutes to prepare a paint film for evaluation.

[Table 4]

| Product Name | Mixing amount (g) |
|---|---|
| RETAN (registered trademark) PG80III 026 clear (Manufactured by Kansai Paint Co., Ltd.) | 40.0 |
| RETAN (registered trademark) PG80 curing agent (Manufactured by Kansai Paint Co., Ltd.) | 4.0 |

A paint using each of the "Samples 6 to 16" was applied on a black and white chart paper (specifically "Form 5C" manufactured by Opacity Chart Leneta Company, Inc.) by means of an 8-mil applicator, and dried at 60°C for 30 minutes to form a paint film on it. Next, the clear compound listed in Table 5 was applied on the above paint film by means of an 8-mil applicator, and dried at 80°C for 30 minutes to prepare a paint film for evaluation.

[Table 5]

| Product Name | Mixing amount (g) |
|---|---|
| AEGIS (registered trademark) RS clear (Manufactured by Nippon Paint Co., Ltd.) | 18.0 |
| Ultra-hardener (Manufactured by Nippon Paint Co., Ltd.) | 6.0 |

<Preparation of paint film using carbon black (i.e., Reference Example)>

The above paint using carbon black was applied on a black and white chart paper (specifically "Form 5C" manufactured by Opacity Chart Leneta Company, Inc.) by means of an 8-mil applicator. The resultant paint was left to stand for 30 minutes, and then dried at 110°C for 40 minutes to prepare a paint film for evaluation.

<Preparation of solvent dispersion>

The "Sample 1" was weighed so as to be 10 g in terms of the solid content, dispersed in 20 mL of a propylene glycol-1-monomethyl ether at 35 kHz for from 10 to 30 minutes by means of an ultrasonic disperser, specifically "UT-305S" (manufactured by SHARP Corporation), and the obtained dispersion liquid was suction filtered or centrifuged. The dispersion and filtration were repeated twice, and a sample was collected. Propylene glycol-1-monomethyl ether was added to the obtained sample so that the solid-content concentration was 55% by mass, and the mixture was performed for 2 minutes by means of a hybrid mixer to obtain a solvent dispersion. The solid contents of the "Sample 1" and the sample collected after filtration were calculated from the mass difference between before and after drying at 120°C for 1 hour.

<Preparation of matte paint>

The above solvent dispersion was weighed so as to be 5.0 g in terms of the solid content, and put into a glass container. Each of the clear paint (specifically "nax Admila (registered trademark) $\alpha$280 correction clear" manufactured by NIPPON PAINT CO., LTD.) and the binder (specifically "nax Admila (registered trademark) $\alpha$901 binder" manufactured by NIPPON PAINT CO., LTD.), which are listed in Table 6, was further put into the glass container so that the pigment volume concentration (PVC) of a matte paint was 15, 30, 50, or 70%, and they were mixed for 2 minutes by means of a hybrid mixer to obtain a matte paint. Each of the above clear paint and the above binder was dried at 100°C for 1 hour, and from the mass difference between before and after the drying thereof, each solid content of the above clear paint and the above binder was calculated.

[Table 6]

| PVC (%) | Clear paint (Parts by mass) | Binder (Parts by mass) |
|---|---|---|
| 15 | 11.2 | 3.3 |
| 30 | 4.6 | 1.3 |
| 50 | 2.0 | 0.6 |
| 70 | 0.8 | 0.2 |

<Preparation of matte paint film>

The above matte paint was applied on a tin plate (150 × 100 × 0.3 mm, manufactured by Taiyukizai Co., LTD.) by means of an 8-mil applicator, and dried at 60°C for 30 minutes to obtain a matte paint film.

<Measurement of L* value, a* value, and b* value of paint film>

In the above paint film, the L* value, a* value, and b* value at an irradiation angle of 45° and an acceptance angle of 45° of the paint film on a white background of a black-and-white chart sheet were measured by means of a multiangle colorimeter, specifically "BYK-maci" (manufactured by BYK-GARDNER).

<Measurement of infrared reflectance of paint film>

In the above paint film, the reflectance at a wavelength of a range from 780 to 2500 nm of the paint film on a white background of a black-and-white chart sheet was measured by means of a UV-Visible/NIR spectrophotometer, specifically "V-670" (manufactured by JASCO Corporation) using the "Spectralon standard reflector" (manufactured by Labsphere, Inc.).

<Calculation of solar reflectance of paint film>

A solar reflectance at a wavelength of a range from 780 to 2500 nm was calculated from the reflectance at a wavelength of a range from 780 to 2500 nm of the above paint film in accordance with JIS K 5602.

<Specular gloss of matte paint film>

In the above matte paint film, the specular glosses at 20°, 60°, and 85° were measured by means of a haze-gloss meter, Cat. No. 4601 (manufactured by BYK-GARDNER).

The preparation conditions of the "Samples 1 to 17" (specifically, the presence or absence of a protective agent and the kind of a protective agent), the cumulative 50% particle size (D1) of bismuth sulfide particles, the cumulative 50% particle diameter (D2) of primary particles, the ratio thereof (D1/D2), and the difference (D3) between the cumulative 90% particle size (D90) and the cumulative 10% particle size (D10) to the cumulative 50% particle size (D50) in the number-based cumulative particle-size distribution (D3) measured by means of a Coulter counter-type particle-size distribution analyzer are shown in Table 7. Hereinafter, the "PVA" represents polyvinyl alcohol, and the "PEG" represents polyethylene glycol. In this regard, each of the blanks in Table 7 means that the measurement has not been performed.

[Table 7]

| | Sample No. | Presence or absence of protective agent | Kind of protective agent | D1 ($\mu$m) | D2 ($\mu$m) | D1/D2 | D3 |
|---|---|---|---|---|---|---|---|
| Example 1 | Sample 1 | Presence | PVA | 3.2 | 1.3 | 2.5 | 1.0 |
| Example 2 | Sample 2 | Presence | PVA | 3.1 | 0.8 | 3.9 | |
| Example 3 | Sample 3 | Presence | PVA | 1.7 | 0.7 | 2.4 | |
| Example 4 | Sample 4 | Presence | PVA | 2.3 | 1.0 | 2.3 | |
| Example 5 | Sample 5 | Presence | PEG | 2.9 | 1.0 | 2.9 | |
| Example 6 | Sample 6 | Presence | PVA | 2.8 | 1.9 | 1.5 | 0.6 |
| Example 7 | Sample 7 | Presence | PVA | 2.6 | 1.8 | 1.4 | 0.6 |
| Example 8 | Sample 8 | Presence | PVA | 2.7 | 2.0 | 1.4 | 0.6 |
| Example 9 | Sample 9 | Presence | PVA | 2.7 | 1.6 | 1.7 | 0.7 |
| Example 10 | Sample 10 | Presence | PVA | 2.6 | 1.2 | 2.2 | 1.0 |
| Example 11 | Sample 11 | Presence | PVA | 3.0 | 1.6 | 1.9 | 0.7 |
| Example 12 | Sample 12 | Presence | PVA | 4.8 | 3.0 | 1.6 | 2.4 |
| Example 13 | Sample 13 | Presence | PVA | 3.1 | 1.7 | 1.8 | 0.7 |
| Example 14 | Sample 14 | Presence | PVA | 2.1 | 1.7 | 1.2 | 0.6 |
| Example 15 | Sample 15 | Presence | PVA | 2.7 | 1.8 | 1.5 | 0.5 |
| Example 16 | Sample 16 | Presence | PVA | 2.5 | 1.7 | 1.5 | 0.6 |
| Comparative Example 1 | Sample 17 | Absence | - | 13.8 | 2.2 | 6.3 | Not measurable |

The L* values, the a* values, the b* values, and the solar reflectances at a wavelength of a range from 780 to 2500 nm, on white backgrounds of the paint films prepared by using the "Samples 1 to 17" and the paint film prepared by using carbon black are shown in Table 8.

[Table 8]

| | Sample No. | L* value, a* value, and b* value of paint film | | | Solar reflectance (%) of paint film at wavelength of 780 to 2500nm |
|---|---|---|---|---|---|
| | | L* | * a | b* | |
| Example 1 | Sample 1 | 0.71 | 0.1 | -0.3 | 42.4 |
| Example 2 | Sample 2 | 1.24 | 0.1 | -0.4 | 47.2 |
| Example 3 | Sample 3 | 1.19 | 0.5 | -0.2 | 50.7 |
| Example 4 | Sample 4 | 0.90 | 0.1 | -0.4 | 45.6 |
| Example 5 | Sample 5 | 1.67 | 0.0 | -0.1 | 45.5 |
| Example 6 | Sample 6 | 0.38 | 0.05 | -0.18 | 42.9 |
| Example 7 | Sample 7 | 0.41 | 0.09 | -0.11 | 41.2 |
| Example 8 | Sample 8 | 0.43 | 0.08 | -0.12 | 41.6 |
| Example 9 | Sample 9 | 0.40 | 0.20 | 0.10 | 42.4 |
| Example 10 | Sample 10 | 0.85 | 0.20 | 0.12 | 44.0 |
| Example 11 | Sample 11 | 0.46 | 0.06 | -0.15 | 44.2 |
| Example 12 | Sample 12 | 2.14 | 0.02 | -0.39 | 42.8 |
| Example 13 | Sample 13 | 0.32 | 0.09 | 0.01 | 42.2 |
| Example 14 | Sample 14 | 0.27 | 0.09 | -0.01 | 43.1 |
| Example 15 | Sample 15 | 0.37 | 0.13 | 0.02 | 42.0 |
| Example 16 | Sample 16 | 0.34 | 0.09 | 0.00 | 43.7 |
| Comparative Example 1 | Sample 17 | 15.8 | 2.8 | 4.9 | 45.9 |
| Reference Example | - | 3.04 | 0.01 | 0.16 | 4.1 |

As for the "Samples 1 to 4" and the "Samples 6 to 16" produced by using the PVA as a protective agent, it can be understood from Table 7 that the cumulative 50% particle sizes (D1) of bismuth sulfide particles thereof are 10 $\mu$m or less, and also understood from Table 8 that since the L* values of the paint films prepared by using these Samples are 10 or less, each of these paint films has a high blackness. Further, it has been found that the "Sample 5" produced by using the "PEG" as a protective agent also has a sufficient blackness as is the case with the "Samples 1 to 4" and the "Samples 6 to 16".

On the other hand, in the "Sample 17" produced without using a protective agent, it has been found from Table 7 that the cumulative 50% particle size (D 1) of bismuth sulfide particles is large, and the size far exceeds 10 μm, and also found from Table 8 that since the L* value of the paint film prepared by using the sample is large and far exceeds 10, the paint film does not have a sufficient blackness.

Also, it has been found from Table 8 that since the L* values of the paint films prepared by using the "Samples 13 to 16" containing the different element listed in Table 7 are smaller than the L* value of the paint film prepared by using a sample (for example, the "Sample 1") containing no different element, these paint films have a further high blackness.

Further, from Table 8, it can be said that the a* values of the paint films using the "Samples 1 to 16" are between -2.0 or more and 2.0 or less, and the b* values of the paint films using the "Samples 1 to 16" are between -3.0 or more and 4.5 or less, and these paint films have blackness with reduced reddish, greenish, yellowish, and bluish.

In the matte paint film prepared by using the "Sample 1", the specular glosses at 20°, 60°, and 85° are shown in Table 9.

[Table 9]

| PVC(%) | Specular gloss | | |
|---|---|---|---|
| | 20° | 60° | 85° |
| 15 | 0.0 | 0.3 | 11.9 |
| 30 | 0.0 | 0.0 | 9.6 |
| 50 | 0.0 | 0.0 | 9.7 |
| 70 | 0.0 | 0.0 | 13.1 |

From Table 9, it has been found that in the matte paint film prepared by using the "Sample 1", the specular gloss at 60° in any PVC is 5 or less, and the gloss is sufficiently reduced. Also, it has been found that the specular gloss at 85° is 30 or less, and the bottom gloss is sufficiently reduced.

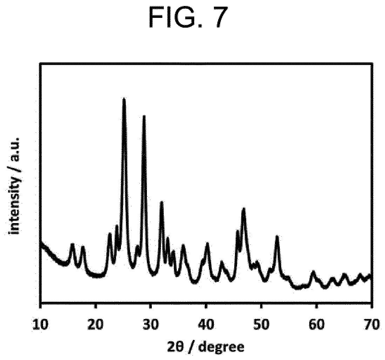

A scanning electron micrograph of the "Sample 1" after drying is illustrated in FIG. 1. From the scanning electron micrographs, it has been confirmed that all of the "Samples 1 to 16" have a shape of assembling one ends of 10 or more needle-like components (the scanning electron micrographs of "Samples 2 to 16" are not shown in the figures.). Further, since the reflectance spectra of the paint film prepared by using the "Sample 1" and the paint film prepared by using carbon black (i.e., the "Reference Example") are shown in FIG. 6. The solar reflectances at a wavelength of a range from 780 to 2500 nm of the paint films using the "Samples 1 to 5" are 40% or more, it can be said that these paint films have sufficiently high infrared reflectance. On the other hand, it cannot be said that the paint film prepared by using carbon black has sufficient infrared reflectance. Further, the powder X-ray diffraction spectrum of the "Sample 1" is shown in FIG. 7. It has been confirmed from the powder X-ray diffraction spectra that all of the "Samples 1 to 17" are a compound identified as $Bi_2S_3$.

## INDUSTRIAL APPLICABILITY

The bismuth sulfide particle according to the present invention has a high blackness, and is useful as a black pigment. Furthermore, the bismuth sulfide particle according to the present invention has a high infrared reflectance, and is useful as a black infrared reflective material. Also, the bismuth sulfide particle according to the present invention has high matting effect, and is useful as a matting pigment. In addition, using the above-described performances, the bismuth sulfide particle according to the present invention can be used for a partition wall material of display, resist ink, or the like.

## Claims

1. A bismuth sulfide particle comprising an agglomerated secondary particle in which primary particles are agglomerated, wherein a cumulative 50% particle size (D1) in volume-based cumulative particle-size distribution measured by means of a laser diffraction/scattering particle-size distribution analyzer is a range from 0.2 μm or more to 10 μm or less.

2. The bismuth sulfide particle according to claim 1, wherein a ratio of the cumulative 50% particle size (D1) in volume-based cumulative particle-size distribution to a cumulative 50% particle diameter (D2) in number-based cumulative particle-size distribution of the primary particles measured by means of a scanning electron microscope, namely the ratio represented as "D1/D2" is a range from more than 1 and 6 or less.

3. The bismuth sulfide particle according to claim 1 or 2, wherein the cumulative 50% particle diameter (D2) is a range from 0.2 $\mu$m or more to 3 $\mu$m or less.

4. The bismuth sulfide particle according to any one of claims 1 to 3, wherein a ratio (D3) of a difference between a cumulative 90% particle size (D90) and a cumulative 10% particle size (D10) to a cumulative 50% particle size (D50) in number-based cumulative particle-size distribution measured by means of a Coulter counter-type particle-size distribution analyzer, namely the ratio calculated by "D3 = (D90 - D10)/D50" is 3.0 or less.

5. The bismuth sulfide particle according to any one of claims 1 to 4 comprising at least one element selected from the group consisting of Al, Ce, La, Fe, and Y and represented as "X", wherein a ratio of the mole number of an atom of the element "X" to the mole number of an atom of bismuth, namely the ratio represented as a "X/Bi" molar ratio is a range from more than 0 to 0.15 or less.

6. The bismuth sulfide particle according to claim 5, wherein the element "X" is Al.

7. The bismuth sulfide particle according to any one of claims 1 to 6, wherein a shape of a bismuth sulfide particle observed with a scanning electron microscope is a shape of assembling one ends of 10 or more needle-like components and/or a shape of having two or more of protrusions of plate-like pieces and/or needle-like pieces on a surface of a substantially spherical body.

8. A black pigment comprising the bismuth sulfide particle according to any one of claims 1 to 7.

9. A matting pigment comprising the bismuth sulfide particle according to any one of claims 1 to 7.

10. An infrared reflective material comprising the bismuth sulfide particle according to any one of claims 1 to 7.

11. A laser reflective material for LiDAR comprising the bismuth sulfide particle according to any one of claims 1 to 7.

12. A solvent composition comprising the bismuth sulfide particle according to any one of claims 1 to 7 and a solvent.

13. A resin composition comprising the bismuth sulfide particle according to any one of claims 1 to 7 and a resin.

14. A paint composition comprising the bismuth sulfide particle according to any one of claims 1 to 7 and a resin for a paint.

15. A paint film comprising the paint composition according to claim 14.

16. The paint film according to claim 15 comprising the bismuth sulfide particle according to any one of claims 1 to 7 at a pigment volume concentration (PVC) of a range from 15% or more to 95% or less.

17. A method for producing a bismuth sulfide particle comprising the step of heating a bismuth compound and a sulfur compound at a range from 30°C or more to 100°C or less in the presence of a protective agent in a dispersion medium.

18. The method for producing a bismuth sulfide particle according to claim 17 comprising the step of keeping a bismuth compound and a sulfur compound at a range from 10°C or more to 40°C or less for a range from 1 hour or more to 24 hours or less before the step of heating the bismuth compound and the sulfur compound in the presence of a protective agent in a dispersion medium.

19. The method for producing a bismuth sulfide particle according to claim 17 or 18 comprising the step of mixing a compound of at least one element selected from the group consisting of Al, Ce, La, Fe, and Y and represented as "X", namely the compound of the element "X" and a bismuth compound.

20. The method for producing a bismuth sulfide particle according to claim 19, wherein the element "X" is Al.

**21.** The method for producing a bismuth sulfide particle according to claim 19 or 20,
wherein the compound of the element "X" is mixed so that a ratio of the mole number of an atom of the element "X" to the mole number of an atom of bismuth, namely the ratio represented as a "X/Bi" molar ratio is a range from more than 0 to 10 or less.

**22.** The method for producing a bismuth sulfide particle according to any one of claims 17 to 21, wherein the protective agent is a water-soluble polymer.

**23.** The method for producing a bismuth sulfide particle according to claim 22, wherein the water-soluble polymer is a polyvinyl alcohol and/or a polyethylene glycol.

**24.** The method for producing a bismuth sulfide particle according to any one of claims 17 to 23 comprising the steps of: mixing a bismuth compound and a sulfur compound so that a ratio of the mole number of an atom of sulfur to the mole number of an atom of bismuth, namely the ratio represented as a "S/Bi" molar ratio is a range from 3.5 or more to 20 or less; and then heating the mixture.

# FIG. 1

# FIG. 2

# FIG. 3

# FIG. 4

# FIG. 5

# FIG. 6

FIG. 7

## INTERNATIONAL SEARCH REPORT

International application No.

**PCT/JP2022/012674**

### A. CLASSIFICATION OF SUBJECT MATTER

*C01G 29/00*(2006.01)i; *C08L 101/00*(2006.01)i; *C09D 201/00*(2006.01)i; *C01G 49/00*(2006.01)i; *C08K 3/30*(2006.01)i; *C09D 7/61*(2018.01)i
FI: C01G29/00; C01G49/00 A; C09D201/00; C09D7/61; C08K3/30; C08L101/00

According to International Patent Classification (IPC) or to both national classification and IPC

### B. FIELDS SEARCHED

Minimum documentation searched (classification system followed by classification symbols)

C01G29/00; C08L101/00; C09D201/00; C01G49/00; C08K3/30; C09D7/61

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2013/129473 A1 (NICHIYU GIKEN KOGYO CO., LTD.) 06 September 2013 (2013-09-06) examples 1-3, paragraph [0030] | 1-4, 8-16 |
| A | | 5-7, 17-24 |
| X | CN 104817111 A (NANJING UNIVERSITY OF POSTS AND TELECOMMUNICATIONS) 05 August 2015 (2015-08-05) example 8, claims 1, 3 | 17-18, 22-24 |
| A | | 1-16, 19-21 |
| A | CN 110182844 A (KUNMING INSTITUTE OF PHYSICS) 30 August 2019 (2019-08-30) claims, examples | 1-24 |
| A | CN 104934527 A (TIANJIN UNIVERSITY OF TECHNOLOGY) 23 September 2015 (2015-09-23) claims, example 3 | 1-24 |

☑ Further documents are listed in the continuation of Box C.  ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **22 April 2022** | **17 May 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

**INTERNATIONAL SEARCH REPORT**

| International application No. |
|---|
| **PCT/JP2022/012674** |

### C.    DOCUMENTS CONSIDERED TO BE RELEVANT

| Category* | Citation of document, with indication, where appropriate, of the relevant passages | Relevant to claim No. |
|---|---|---|
| A | JP 5-264984 A (SUMITOMO CEMENT CO., LTD.) 15 October 1993 (1993-10-15) claims | 1-24 |
| P, A | WO 2021/070700 A1 (ISHIHARA SANGYO KAISHA, LTD) 15 April 2021 (2021-04-15) claims, examples | 1-24 |

Form PCT/ISA/210 (second sheet) (January 2015)

INTERNATIONAL SEARCH REPORT
Information on patent family members

International application No.

**PCT/JP2022/012674**

| Patent document cited in search report | | | Publication date (day/month/year) | Patent family member(s) | Publication date (day/month/year) |
|---|---|---|---|---|---|
| WO | 2013/129473 | A1 | 06 September 2013 | US 2015/0050745 A1 examples 1-3, paragraph [0033] | |
| CN | 104817111 | A | 05 August 2015 | (Family: none) | |
| CN | 110182844 | A | 30 August 2019 | (Family: none) | |
| CN | 104934527 | A | 23 September 2015 | (Family: none) | |
| JP | 5-264984 | A | 15 October 1993 | (Family: none) | |
| WO | 2021/070700 | A1 | 15 April 2021 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H05264984 A

**Non-patent literature cited in the description**

- *Journal of Physics and Chemistry of Solids,* 2010, vol. 71, 712-715
- *Materials Letters,* 2013, vol. 91, 100-102